(19) Europäisches Patentamt
European Patent Office
Office européen des brevets

(11) **EP 3 442 074 A2**

(12) **EUROPEAN PATENT APPLICATION**

(43) Date of publication:
**13.02.2019 Bulletin 2019/07**

(51) Int Cl.:
*H01M 10/625* [(2014.01)]   *H01M 10/63* [(2014.01)]
*H01M 10/6567* [(2014.01)]   *H01M 10/66* [(2014.01)]

(21) Application number: **18184467.1**

(22) Date of filing: **19.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.08.2017 JP 2017153471**

(71) Applicant: **TOYOTA JIDOSHA KABUSHIKI KAISHA**
**Toyota-shi, Aichi-ken, 471-8571 (JP)**

(72) Inventor: **TOKOZAKURA, Daisuke**
**Aichi-ken, 471-8571 (JP)**

(74) Representative: **D Young & Co LLP**
**120 Holborn**
**London EC1N 2DY (GB)**

(54) **COOLING DEVICE FOR VEHICLE AND CONTROL METHOD FOR VEHICLE**

(57)   In a cooling device (1) for a vehicle capable of switching a circulation direction of a cooling medium by switching a rotation direction of a motor pump (11) in a cooling circuit (10) including a plurality of heat generation sources (31, 32; $B_1$, $B_x$; 71, 72; 81, 82) placed in series so as to allow the cooling medium to flow, an ECU (20) includes switch means for switching the rotation direction of the motor pump (11), when determining that the temperature of a target heat generation source, out of the heat generation sources (31, 32; $B_1$, $B_x$; 71, 72; 81, 82), is in a specified high temperature state, the target heat generation source being positioned at a most downstream side with respect to an outlet of a radiator (12) in a circulation direction of the cooling medium at current time.

## FIG. 1

POSITIVE DIRECTION (NORMAL STATE)

NEGATIVE DIRECTION

EP 3 442 074 A2

**Description**

BACKGROUND OF THE INVENTION

1. Field of the Invention

The present invention relates to a cooling device and a control method for a vehicle.

2. Description of Related Art

Disclosed in Japanese Patent Application Publication No. 2009-245802 (JP 2009-245802 A) is a cooling device for a vehicle. The cooling device is configured to circulate a cooling medium in a cooling circuit with a pump, while periodically switching a rotation direction of the pump in order to cool a plurality of battery cells which are heat generation sources, the battery cells being serially placed in a circulation direction of the cooling medium.

SUMMARY OF THE INVENTION

However, the device disclosed in JP 2009-245802 A is configured to periodically switch the rotation direction of the pump without taking into consideration the state of heat generation in the heat generation sources. Accordingly, the rotation direction of the pump may be switched even in a situation where the necessity of switching the circulation direction of the cooling medium is low. In that case, since switching the rotation direction of the pump reduces a discharge amount of the pump, frequent switching of the rotation direction of the pump may cause deteriorated cooling performance.

The present invention provides a cooling device and a control method for a vehicle, which are capable of switching the rotation direction of a pump, while suppressing deterioration in cooling performance.

A first aspect of the present invention relates to a cooling device for a vehicle. The cooling device includes a cooling circuit, a motor pump, a radiator, and an electronic control unit. The cooling circuit allows circulation of a cooling medium that flows through and cools a plurality of heat generation sources. The heat generation sources are placed in series in the cooling circuit. The motor pump is placed in the cooling circuit. The motor pump is configured to circulate the cooling medium in the cooling circuit, the motor pump having a rotation direction switched between a positive rotation direction and a negative rotation direction that is opposite to the positive rotation direction. The radiator is placed in the cooling circuit. The radiator is configured to radiate heat from the cooling medium flowing through the cooling circuit. The electronic control unit is configured to control an operation of the motor pump. The electronic control unit is configured to execute control for switching the rotation direction of the motor pump to switch a circulation direction of the cooling medium. The electronic control unit is configured to execute the control for switching the rotation direction of the motor pump, when the electronic control unit determines that a target heat generation source, out of the heat generation sources, is in a specified high temperature state, the target heat generation source being positioned at a most downstream side with respect to an outlet of the radiator in the circulation direction of the cooling medium when the electric rotary pump is rotating.

According to the configuration, when the electronic control unit determines that the target heat generation source is in a specified high temperature state, the rotation direction of the motor pump can be switched. This makes it possible to switch the circulation direction of the cooling medium in consideration of a heat generating state of the target heat generation source. Hence, deterioration in cooling performance can be suppressed.

In the cooling device, the electronic control unit may be configured to determine that the target heat generation source is in the specified high temperature state when a temperature of the cooling medium at an outlet side of the target heat generation source is higher than a reference temperature. The reference temperature may be a temperature determined for each of the target heat generation sources.

According to the configuration, the heat generating state of the target heat generation source can be estimated based on the temperature of the cooling medium flowing at the outlet side of the target heat generation source.

In the cooling device, the cooling circuit may be placed between the target heat generation source and the radiator. The cooling circuit may include a temperature sensor that measures the temperature of the cooling medium at the outlet side of the target heat generation source. The electronic control unit may be configured to execute the control for switching the rotation direction of the motor pump when the temperature of the cooling medium measured with the temperature sensor is higher than the reference temperature.

According to the configuration, the heat generating state in the target heat generation source can be estimated based on the temperature of the cooling medium measured with the temperature sensor. Hence, the precision in estimating that the target heat generation source is in the specified high temperature state is enhanced.

In the cooling device, the heat generation sources may include a first heat generation source and a second heat generation source. The first heat generation source may be positioned at a most upstream side with respect to the outlet of the radiator in the circulation direction of the cooling medium when the motor pump is rotating in the positive rotation direction. The second heat generation source may be positioned at a most downstream side with respect to the outlet of the radiator in the circulation direction of the cooling medium when the motor pump is rotating in the positive rotation direction. The temperature sensor may be placed between an outlet of the second heat generation source and an inlet of the radiator in the circulation direction of the cooling medium in the state where the motor pump is rotating in the positive rotation direction. The electronic control unit may be configured to estimate, when the rotation direction of the motor pump is the negative rotation direction, the temperature of the cooling medium at the outlet side of the first heat generation source with use of the temperature of the cooling medium measured with the temperature sensor. The electronic control unit may be configured to execute control for switching the rotation direction of the motor pump from the positive rotation direction to the negative rotation direction, when the rotation direction of the motor pump is the positive rotation direction, the second heat generation source is the target heat generation source, and the temperature of the cooling medium is higher than the reference temperature. The electronic control unit may execute control for switching the rotation direction of the motor pump from the negative rotation direction to the positive rotation direction, when the rotation direction of the motor pump is the negative rotation direction, the first heat generation source is the target heat generation source, and the temperature of the cooling medium is higher than the reference temperature.

According to the configuration, a temperature sensor is provided between the second heat generation source and the radiator, the second heat generation source being positioned at the downstream side of the first heat generation source in the circulation direction of the cooling medium when the motor pump is rotating in the positive rotation direction. This enhances the precision in estimating the temperature of the second heat generation source with use of the temperature of the cooling medium measured with the temperature sensor when the second heat generation source is the target heat generation source. One temperature sensor may be provided in the cooling circuit.

In the cooling device, a variation of an amount of heat generation in the second heat generation source corresponding to a traveling state of the vehicle may be larger than a variation of an amount of heat generation in the first heat generation source.

According to the configuration, in the state where the motor pump is rotating in the positive rotation direction, the second heat generation source is positioned at the downstream side of the first heat generation source. As a consequence, the performance to dissipate heat from the second heat generation source becomes is relatively reduced. Accordingly, the second heat generation source is thermally severe, as it tends to become higher in temperature than the first heat generation source. Hence, the temperature of the cooling medium at the side of the second heat generation source is measured with the temperature sensor.

In the cooling device, the heat generation sources may include a first heat generation source and a second heat generation source. The first heat generation source may be positioned at a most upstream side with respect to the outlet of the radiator in the circulation direction of the cooling medium when the motor pump is rotating in the positive rotation direction. The second heat generation source may be positioned at a most downstream side with respect to the outlet of the radiator in the circulation direction of the cooling medium when the motor pump is rotating in the positive rotation direction. The temperature sensor may be placed between an outlet of the radiator and an inlet of the first heat generation source in the circulation direction of the cooling medium in the state where the motor pump is rotating in the positive rotation direction. The electronic control unit may be configured to estimate, when the rotation direction of the motor pump is the positive rotation direction, the temperature of the cooling medium at the outlet side of the second heat generation source with use of the temperature of the cooling medium measured with the temperature sensor. The electronic control unit may be configured to execute control for switching the rotation direction of the motor pump from the positive rotation direction to the negative rotation direction, when the rotation direction of the motor pump is the positive rotation direction, the second heat generation source is the target heat generation source, and the temperature of the cooling medium is higher than the reference temperature. The electronic control unit may execute control for switching the rotation direction of the motor pump from the negative rotation direction to the positive rotation direction, when the rotation direction of the motor pump is the negative rotation direction, the first heat generation source is the target heat generation source, and the temperature of the cooling medium is higher than the reference temperature.

According to the configuration, the temperature sensor may be placed at the second heat generation source side or any other places in the cooling circuit. One temperature sensor may be provided in the cooling circuit.

In the cooling device, the electronic control unit may be configured to estimate the temperature of the cooling medium at the outlet side of the target heat generation source based on a traveling state of the vehicle. The electronic control unit may be configured to execute the control for switching the rotation direction of the motor pump when the estimated temperature of the cooling medium is higher than the reference temperature.

According to the configuration, even without the temperature sensor provided in the cooling circuit, the circulation direction of the cooling medium can be switched in consideration of the heat generating state in the target heat generation source. When the temperature sensor is not provided, the number of parts count can be reduced accordingly. As a result, cost reduction can be achieved.

In the cooling device, the heat generation sources may include a first heat generation source and a second heat generation source. The first heat generation source may be positioned at a most upstream side with respect to the outlet of the radiator in the circulation direction of the cooling medium when the motor pump is rotating in the positive rotation direction. The second heat generation source may be positioned at a most downstream side with respect to the outlet of the radiator in the circulation direction of the cooling medium when the motor pump is rotating in the positive rotation direction. The electronic control unit may be configured to estimate, when the rotation direction of the motor pump is the positive rotation direction, the temperature of the cooling medium at the outlet side of the second heat generation source based on the traveling state of the vehicle with the second heat generation source as the target heat generation source. The electronic control unit may be configured to estimate, when the rotation direction of the motor pump is the negative rotation direction, the temperature of the cooling medium at the outlet side of the first heat generation source based on the traveling state of the vehicle with the first heat generation source as the target heat generation source. The electronic control unit may be configured to execute control for switching the rotation direction of the motor pump from the positive rotation direction to the negative rotation direction, when the rotation direction of the motor pump is the positive rotation direction, and the estimated temperature of the cooling medium at the outlet side of the second heat generation source is higher than the reference temperature. The electronic control unit may be configured to execute control for switching the rotation direction of the motor pump from the negative rotation direction to the positive rotation direction, when the rotation direction of the motor pump is the negative rotation direction, and the estimated temperature of the cooling medium at the outlet side of the first heat generation source is higher than the reference temperature.

According to the configuration, the temperature of the cooling medium flowing between the first heat generation source and the radiator, and the temperature of the cooling medium flowing between the second heat generation source and the radiator can be estimated without a temperature sensor provided in the cooling circuit. When the temperature sensor is not provided, the number of parts count can be reduced accordingly. As a result, cost reduction can be achieved.

In the cooling device, the reference temperature may be a specified temperature within a temperature range that enables the target heat generation source to operate normally.

According to the configuration, it is possible to suppress the situation where the temperature of the target heat generation source exceeds the upper limit of the temperature range where the target heat generation source can operate normally. Accordingly, it is possible to suppress decline in life of the heat generation source caused by heat.

A second aspect of the present invention provides a cooling device for a vehicle. The cooling device includes a cooling circuit, a radiator, a motor pump, and an electronic control unit. The cooling circuit allows circulation of a cooling medium that cools a plurality of heat generation sources. The heat generation sources are placed in series to cause the cooling medium to flow through the cooling circuit. The radiator is placed in the cooling circuit. The radiator is configured to radiate heat from the cooling medium flowing through the cooling circuit. The heat generation sources include a first heat generation source and a second heat generation source. The motor pump is placed in the cooling circuit. The motor pump is configured to circulate the cooling medium in the cooling circuit, the motor pump having rotation direction switched between a positive rotation direction and a negative rotation direction that is opposite to the positive rotation direction. The first heat generation source is a heat generation source positioned at a most upstream side, and the second heat generation source is a heat generation source positioned at a most downstream side with respect to an outlet of the radiator in a circulation direction of the cooling medium in a state where the motor pump is rotating in the positive rotation direction. The electronic control unit is configured to control an operation of the motor pump. The electronic control unit is configured to execute control for switching the rotation direction of the motor pump to switch the circulation direction of the cooling medium. The electronic control unit is configured to execute the control for switching the rotation direction of the motor pump, when the motor pump is rotating in the positive rotation direction, and the electronic control unit determines that the second heat generation source is in a high temperature state where a first temperature difference exceeds a specified reference, the first temperature difference being a value obtained by subtracting a temperature of the first heat generation source from a temperature of the second heat generation source. The electronic control unit is configured to execute the control for switching the rotation direction of the motor pump, when the motor pump is rotating in the negative rotation direction, and the electronic control unit determines that the first heat generation source is in a high temperature state where a second temperature difference exceeds a specified reference, the second temperature difference being a value obtained by subtracting the temperature of the second heat generation source from the temperature of the first heat generation source.

According to the configuration, when the electronic control unit determines that the first heat generation source or the second heat generation source is in the high temperature state where the temperature difference between the temperature of the first heat generation source and the temperature of the second heat generation source exceeds the specified reference, the rotation direction of the motor pump is switched. Accordingly, a difference between the cooling amount of the first heat generation source and the cooling amount of the second heat generation source can be decreased.

In the cooling device, the electronic control unit may be configured to determine whether or not the first heat generation source or the second heat generation source is in the high temperature state with use of a temperature map indicating a relation between the temperature of the cooling medium flowing between the first heat generation source and the radiator and the temperature of the cooling medium flowing between the second heat generation source and the radiator.

According to the configuration, the electronic control unit can determine whether or not the first heat generation source or the second heat generation source is in the high temperature state where the first temperature difference or the second temperature difference exceeds the specified reference with use of the temperature map relating to the temperature of the cooling medium.

In the cooling device, the temperature map may be a map where the temperature of the cooling medium flowing between the first heat generation source and the radiator corresponds to the temperature of the first heat generation source, and the temperature of the cooling medium flowing between the second heat generation source and the radiator corresponds to the temperature of the second heat generation source. The temperature map may include a reference straight line predetermined based on a first limit temperature and a second limit temperature, the first limit temperature being an upper limit of a temperature range that enables the first heat generation source to operate normally, the second limit temperature being an upper limit of a temperature range that enables the second heat generation source to operate normally. The electronic control unit may be configured to determine that the first heat generation source or the second heat generation source is in the high temperature state, when a distance between a target point and the reference straight line is larger than a specified value, the target point being determined on the temperature map in accordance with the temperature of the cooling medium flowing between the first heat generation source and the radiator and the temperature of the cooling medium flowing between the second heat generation source and the radiator.

According to the configuration, when the distance from the target point to the reference straight line is larger than a specified value on the temperature map indicative of the relation between the temperature of the first heat generation source and the temperature of the second heat generation source, the rotation direction of the motor pump can be switched to switch the circulation direction of the cooling medium.

In the cooling device, the cooling circuit may include a temperature sensor that measures the temperature of the cooling medium. The temperature sensor may be placed between the second heat generation source and the radiator. The electronic control unit may be configured to estimate the temperature of the cooling medium flowing between the first heat generation source and the radiator with use of the temperature of the cooling medium measured with the temperature sensor. The reference straight line may be a straight line connecting, on the temperature map, a point constituted of the first limit temperature and the second limit temperature and a point where the temperature of the first heat generation source and the temperature of the second heat generation source are zero °C. The electronic control unit may be configured to determine the target point where the estimated temperature of the cooling medium is assumed to be the temperature of the first heat generation source on the temperature map, and the temperature of the cooling medium measured with the temperature sensor is assumed to be the temperature of the second heat generation source on the temperature map.

According to the configuration, the temperature of the cooling medium flowing between the second heat generation source and the radiator can be measured with the temperature sensor, and the temperature of the cooling medium flowing between the first heat generation source and the radiator can be estimated based on the measured temperature. Since one temperature sensor may be provided in the cooling circuit, cost increase can be suppressed.

In the cooling device, a variation of an amount of heat generation in the second heat generation source corresponding to a traveling state of the vehicle may be larger than a variation of an amount of heat generation in the first heat generation source.

According to the configuration, in the state where the motor pump is rotating in the positive rotation direction, the temperature sensor can measure the temperature of the cooling medium at the side of the second heat generation source where the variation of the amount of heat generation is relatively large. According to the configuration, in the state where the motor pump is rotating in the positive rotation direction, the second heat generation source is positioned at the downstream side of the first heat generation source. As a consequence, the performance to dissipate heat from the second heat generation source becomes is relatively reduced. Accordingly, the second heat generation source is thermally severe, as it tends to become higher in temperature than the first heat generation source. Hence, the temperature of the cooling medium at the side of the second heat generation source is measured with the temperature sensor.

In the cooling device, the cooling circuit may include a temperature sensor that measures the temperature of the cooling medium. The temperature sensor may be placed between the first heat generation source and the radiator. The electronic control unit may be configured to estimate the temperature of the cooling medium flowing between the second heat generation source and the radiator with use of the temperature of the cooling medium measured with the temperature sensor. The reference straight line may be a straight line connecting, on the temperature map, a point constituted of the first limit temperature and the second limit temperature and a point where the temperature of the first heat generation source and the temperature of the second heat generation source are zero °C. The electronic control unit may be configured to determine the target point where the temperature of the cooling medium measured with the temperature sensor is assumed to be the temperature of the first heat generation source, and the estimated temperature of the cooling medium is assumed to be the temperature of the second heat generation source.

According to the configuration, the temperature sensor may be placed at the second heat generation source

5

side or any other places in the cooling circuit. One temperature sensor may be provided in the cooling circuit.

In the cooling device, the electronic control unit may be configured to estimate the temperature of the cooling medium flowing between the first heat generation source and the radiator and estimate the temperature of the cooling medium between the second heat generation source and the radiator based on the traveling state of the vehicle. The reference straight line may be a straight line connecting, on the temperature map, a point constituted of the first limit temperature and the second limit temperature and a point where the temperature of the first heat generation source and the temperature of the second heat generation source are zero °C. The electronic control unit may be configured to determine the target point where the measured temperature of the cooling medium at a side of the first heat generation source is assumed to be the temperature of the first heat generation source, and the estimated temperature of the cooling medium at a side of the second heat generation source is assumed to be the temperature of the second heat generation source.

According to the configuration, the target point on the temperature map can be determined with use of the temperature of the cooling medium estimated at the side of the first heat generation source and at the side of the second heat generation source.

In the cooling device, the specified value may include a first specified value and a second specified value. The first specified value is a distance from a point to the reference straight line on the temperature map, the point being constituted of a first temperature and the second limit temperature, the first temperature being within a temperature range of 70% to 90% of the first limit temperature. The second specified value is a distance from another point to the reference straight line on the temperature map, the another point constituting a second temperature and the first limit temperature, the second temperature being within a temperature range of 70% to 90% of the second limit temperature. The electronic control unit may be configured to execute control for switching the rotation direction of the motor pump from the positive rotation direction to the negative rotation direction, when the rotation direction of the motor pump is the positive rotation direction, the temperature of the cooling medium at the side of the second heat generation source is higher than the temperature of the cooling medium at the side of the first heat generation source, and the distance from the target point to the reference straight line is larger than the first specified value. The electronic control unit may be configured to execute control for switching the rotation direction of the motor pump from the negative rotation direction to the positive rotation direction, when the rotation direction of the motor pump is the negative rotation direction, the temperature of the cooling medium at the side of the first heat generation source is higher than the temperature of the cooling medium at the side of the second heat generation source, and the distance from the target point to the reference straight line is larger than the second specified value.

According to the configuration, each specified value is determined based on the limit temperatures of the heat generation sources. The specified value used in comparison with the distance from the target point to the reference straight line can properly be used based on the rotation direction of the motor pump and on a size relation between the temperature of the cooling medium at the side of the first heat generation source and the temperature of the cooling medium at the side of the second heat generation source.

In the cooling device, the first heat generation source and the second heat generation source may be battery modules included in a battery unit.

According to the configuration, the circulation direction of the cooling medium can be switched in consideration of the heat generating state of the battery module positioned at the most downstream side with respect to the outlet of the radiator in the circulation direction of the cooling medium.

In the cooling device, the first heat generation source may be an inverter. The second heat generation source may be a heat exchanger that performs heat exchange between an oil supplied to a power transmission device of the vehicle and the cooling medium.

According to the configuration, the rotation direction of the motor pump is switched from the positive rotation direction to the negative rotation direction. As a result, the amount of heat exchange in the heat exchanger can be increased from the amount before switching the rotation direction.

In the cooling device, the first heat generation source and the second heat generation source may be heat exchangers that perform heat exchange between an oil that cools in-wheel motors provided in right and left wheels of the vehicle and the cooling medium.

According to the configuration, when the rotation direction of the motor pump is switched, the amount of heat exchanged in the heat exchanger, which is positioned relatively at the downstream side with respect to the outlet of the radiator in the circulation direction of the cooling medium, can be increased from the amount before switching the rotation direction.

A third aspect of the present invention provides a control method for a vehicle. The vehicle includes a plurality of heat generation sources, a cooling circuit, a motor pump, a radiator, and an electronic control unit. The cooling circuits allows circulation of a cooling medium that flows through and cools the heat generation sources. The heat generation sources are placed in series in the cooling circuit. The cooling circuit allows circulation of the cooling medium that cools the heat generation sources. The motor pump is placed in the cooling circuit. The motor pump is configured to circulate the cooling medium in the cooling circuit, the motor pump having a rotation direction switched between a positive rotation direction and a negative rotation direction that is opposite to the positive rotation direction, The radiator is placed in the cooling circuit. The radiator is configured to radiate heat from the cooling medium flowing through the cooling circuit. The control method includes: controlling, by the electronic control unit, an operation of the motor pump; executing, by the electronic control unit, control for switching the rotation direction of the motor pump to switch a circulation direction of the cooling medium; and executing, by the electronic control unit, the control for switching the rotation direction of the motor pump, when the electronic control unit determines that a target heat generation source, out of the heat generation sources, is in a specified high temperature state, the target heat generation source being positioned at a most downstream side with respect to an outlet of the radiator in the circulation direction of the cooling medium when the motor pump is rotating.

A fourth aspect of the present invention provides a control method for a vehicle. The vehicle includes a plurality of heat generation sources, a cooling circuit, a motor pump, a radiator, and an electronic control unit. The heat generation sources are placed in series to cause the cooling medium to flow. The heat generation sources include a first heat generation source and a second heat generation source. The cooling medium circulates in the cooling circuit that cools the heat generation sources. The radiator is placed in the cooling circuit. The radiator is configured to radiate heat from the cooling medium flowing through the cooling circuit. The motor pump is placed in the cooling circuit. The motor pump is configured to circulate the cooling medium in the cooling circuit, the motor pump having a rotation direction switched between a positive rotation direction and a negative rotation direction that is opposite to the positive rotation direction. The first heat generation source is a heat generation source positioned at a most upstream side, and the second heat generation source is a heat generation source positioned at a most downstream side with respect to an outlet of the radiator in a circulation direction of the cooling medium in a state where the motor pump is rotating in the positive rotation direction. The control method includes: controlling, by the electronic control unit, an operation of the motor pump; executing, by the electronic control unit, control for switching the rotation direction of the motor pump to switch the circulation direction of the cooling medium; t executing, by the electronic control unit, the control for switching the rotation direction of the motor pump, when the motor pump is rotating in the positive rotation direction, and the electronic control unit determines that the second heat generation source is in a high temperature state where a first temperature difference exceeds a specified reference, the first temperature difference being a value obtained by subtracting a temperature of the first heat generation source from a temperature of the second heat generation source; and executing, by the electronic control unit, the control for switching the rotation direction of the motor pump, when the motor pump is rotating in the negative rotation direction, and the electronic control unit determines that the first heat generation source is in a high temperature state where a second temperature difference exceeds a specified reference, the second temperature difference being a value obtained by subtracting the temperature of the second heat generation source from the temperature of the first heat generation source.

According to the aspects, the rotation direction of the motor pump can be switched in consideration of the heat generating state in the target heat generation source positioned at the most downstream side with respect to the outlet of the radiator in the circulation direction of the cooling medium in the cooling circuit including a plurality of heat generation sources placed in series. Accordingly, the rotation direction of the motor pump is switched when the necessity of cooling the target heat generation source increases. This makes it possible to suppress the frequency of reduction in the flow rate of the cooling medium at the time of switching, and to thereby enhance the cooling performance of the entire cooling circuit.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic view illustrating a cooling device for a vehicle in a first embodiment;
FIG. 2 is a block diagram for describing the configuration of an ECU;
FIG. 3 is a map illustrating the relation between an output and a discharge amount in a motor pump;
FIG. 4 is a map illustrating radiation performance of a radiator with a vehicle speed and a flow rate as a parameter;
FIG. 5 is a flowchart illustrating a control flow for switching a rotation direction;
FIG. 6 is a schematic view illustrating one example of a cooling circuit mounted on an electric vehicle;
FIG. 7 is a schematic view illustrating one example of a battery unit mounted on the electric vehicle;
FIG. 8 is a schematic view illustrating one example of a cooling circuit mounted on a hybrid vehicle;
FIG. 9 is a schematic view illustrating one example of a cooling circuit mounted on an in-wheel motor vehicle;
FIG. 10 is a schematic view illustrating one example of the in-wheel motor vehicle;
FIG. 11 is a temperature map illustrating the relation between the temperature of a cooling medium at a first heat generation source side and the temperature of the cooling medium at a second heat generation source side;

FIG. 12 is an explanatory view illustrating a temperature map used in a second embodiment;

FIG. 13 is an explanatory view illustrating a temperature change of the cooling medium when the cooling medium flows in a positive direction;

FIG. 14 is a flowchart illustrating a control flow for switching the rotation direction in the second embodiment;

FIG. 15 is an explanatory view illustrating a change in distance on the temperature map illustrated in FIG. 13;

FIG. 16 is a map schematically illustrating one example of a temperature map used in a fourth example;

FIG. 17 is a map schematically illustrating one example of a temperature map used in a fifth example; and

FIG. 18 is a map schematically illustrating one example of a temperature map used in a sixth example.

DETAILED DESCRIPTION OF EMBODIMENTS

Hereinafter, a specific description will be given of a cooling device for a vehicle in embodiments of the present invention with reference to the drawings.

First Embodiment

A cooling device for a vehicle in a first embodiment relates to the configuration of circulating a cooling medium in a cooling circuit including a plurality of heat generation sources placed in series. The cooling device can switch a circulation direction of the cooling medium in consideration of the cooling performance of a heat generation out of the heat generation sources, the heat generation source being positioned at the most downstream side with respect to an outlet of a radiator in the circulation direction of the cooling medium. In the first embodiment, the cooling device can estimate, based on the temperature of the cooling medium flowing out of the heat generation source, increase in the necessity of cooling the heat generation source positioned at the most downstream side.

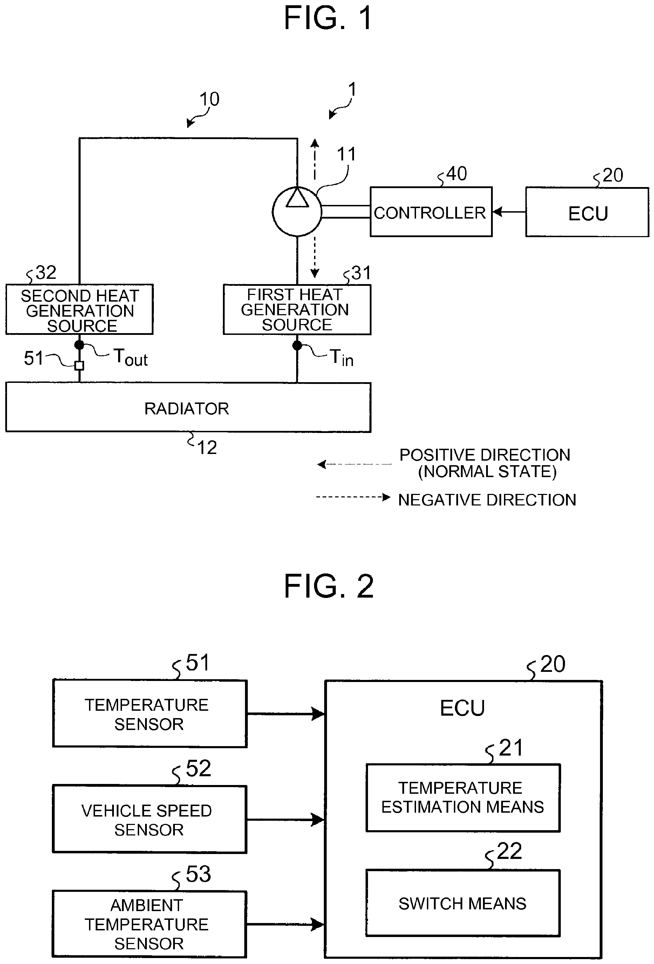

FIG. 1 is a schematic view illustrating the cooling device 1 for a vehicle in the first embodiment. The cooling device 1 includes a cooling circuit 10 that allows circulation of the cooling medium that cools the heat generation sources. The cooling device 1 also includes an electronic control unit (ECU) 20 configured to perform control for switching the circulation direction of the cooling medium in accordance with a heat generating state of the heat generation sources.

The cooling circuit 10 is a closed circuit configured to include a motor pump 11 that circulates the cooling medium, a radiator 12 that radiates heat from the cooling medium, a first heat generation source 31 as a first cooling object, and a second heat generation source 32 as a second cooling object. In the cooling circuit 10, the heat generation sources 31, 32, the motor pump 11, and the radiator 12 are placed in series to allow the cooling medium to flow therethrough. Component members in the cooling circuit 10 are connected to each other through a circulation path (cooling medium channel).

The motor pump 11 is a pump that can switch the rotation direction of a rotor. When the rotor rotates, the motor pump 11 sucks the cooling medium through a suction port, and discharges the cooling medium through a discharge port. For example, the motor pump 11 is constituted of a pump such as a turbine pump and a rotary pump. The motor pump 11 is driven and controlled by an ECU 20 and a controller 40. When the rotation direction of the motor pump 11 is a positive rotation direction for a normal state, the cooling medium flows through the cooling circuit 10 in the positive direction as illustrated with a chain line arrow in FIG. 1. When the cooling medium flows in the positive direction, the cooling medium cooled in the radiator 12 is first supplied to the first heat generation source 31 and is then supplied to the second heat generation source 32. When the rotation direction of the motor pump 11 is a negative rotation direction opposite to the positive rotation direction, the cooling medium flows through the cooling circuit 10 in the negative direction as illustrated with a broken line arrow in FIG. 1. When the cooling medium flows in the negative direction, the cooling medium cooled in the radiator 12 is first supplied to the second heat generation source 32 and is then supplied to the first heat generation source 31. Switching the rotation direction of the motor pump 11 in this way switches the circulation direction of the cooling medium in the cooling circuit 10. The suction port for sucking the cooling medium when the rotation direction is the positive rotation direction functions as a discharge port when the rotation direction is reversed to the negative rotation direction. The discharge port for discharging the cooling medium when the rotation direction is the positive rotation direction functions as a suction port when the rotation direction is reversed to the negative rotation direction.

The radiator 12 is a radiator mounted on the vehicle. The radiator 12 performs heat exchange between the cooling medium flowing in the cooling circuit 10 and ambient air to cool the cooling medium.

The first heat generation source 31 and the second heat generation source 32 are component members that generate heat when the vehicle drives. For example, the first heat generation source 31 and the second heat generation source 32 correspond to component members such as a battery module, an inverter, and a heat exchanger. When the cooling medium flows in the positive direction, the heat generation source (target heat generation source) positioned at the most downstream side with respect to the outlet of the radiator 12 serves as the second heat generation source 32.

On the contrary, when the cooling medium flows in the negative direction, the heat generation source (target heat generation source) positioned at the most downstream side with respect to the outlet of the radiator 12 serves as the first heat generation source 31.

The cooling circuit 10 also includes a temperature sensor 51 provided for measuring the temperature of the cooling medium between the second heat generation source 32 and the radiator 12. The temperature sensor 51 measures a temperature $T_{out}$ of the cooling medium and outputs the temperature $T_{out}$ as a sensor value to the ECU 20.

The ECU 20 is an electronic control unit that controls the vehicle based on signals input from various sensors mounted on the vehicle. The ECU 20 performs a control for switching the rotation direction of the motor pump 11. The ECU 20 outputs a command signal to the controller 40. A detailed configuration of the ECU 20 will be described later with reference to FIG. 2.

The controller 40 is connected with the motor pump 11 to switch the rotation direction of the motor pump 11 in response to the command signal input from the ECU 20. When the ECU 20 controls the controller 40, the rotation direction and a discharge amount (flow rate) of the motor pump 11 can be changed.

FIG. 2 is a block diagram for describing the configuration of the ECU 20. Here, the control executed by the ECU 20 is described as temperature estimation means 21 and switch means 22 for convenience. The ECU 20 receives sensor signals from the temperature sensor 51 as well as from a vehicle speed sensor 52 that measures a vehicle speed and an ambient temperature sensor 53 that measures an ambient temperature outside the vehicle.

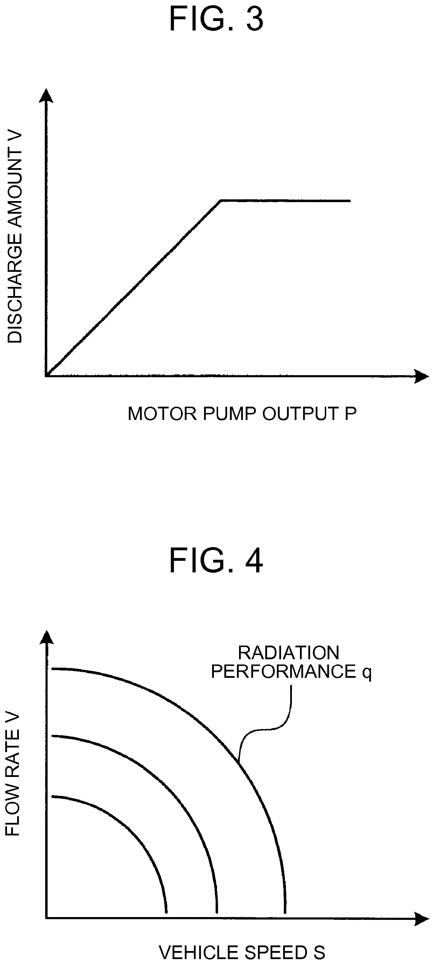

The temperature estimation means 21 estimates a temperature $T_{in}$ of the cooling medium flowing between the first heat generation source 31 and the radiator 12, when the cooling medium is flowing in the negative direction. For example, the temperature $T_{in}$ can be estimated based on an operating state of the motor pump 11 and on a heat radiation quantity Q of the radiator 12. An estimation method of the temperature $T_{in}$ will be described with reference to FIGS. 3 to 4.

FIG. 3 is a map illustrating the relation between an output P and a discharge amount V in the motor pump 11. FIG. 4 is a map illustrating radiation performance q of the radiator 12 with a vehicle speed S and a flow rate V as a parameter; As illustrated in FIG. 3, in the state where the output P is small, the output P and the discharge amount V are in a proportional relation. In the state where the output P is a specified value or more, the discharge amount V is constant against a change in the output P. The ECU 20 can change the output P of the motor pump 11 by changing an electric current value of electric current applied to the motor pump 11. Based on the electric current value, the ECU 20 can calculate the output P. Accordingly, the ECU 20 can calculate the discharge amount V with use of the output P and a map illustrated in FIG. 3. The discharge amount V illustrated in FIG. 3 is equal to the flow rate V of the cooling medium flowing through the cooling circuit 10 per unit time. The ECU 20 further calculates the radiation performance q of the radiator 12 with use of the calculated flow rate V, a vehicle speed S measured with the vehicle speed sensor 52, and a map illustrated in FIG. 4. The vehicle speed S illustrated in FIG. 4 may be assumed to be a wind speed of the air that cools the radiator 12. Curves illustrated in FIG. 4 represent lines of identical radiation performance q.

When the cooling medium flows in the negative direction, the cooling medium at the temperature $T_{in}$ flows from the side of the first heat generation source 31 into the radiator 12, and the cooling medium is cooled in the radiator 12. In this case, the heat radiation quantity Q of the radiator 12 is expressed by Expression (1).

$$Q = q \cdot \left( T_{in} - T_{air} \right) \qquad \cdots (1)$$

In Expression (1), q is radiation performance of the radiator 12, $T_{air}$ is an ambient temperature measured with the ambient temperature sensor 53, and $T_{in}$ is a temperature of the cooling medium flowing into the radiator 12.

Furthermore, when the cooling medium flows in the negative direction, the cooling medium flowing out of the radiator 12 is first supplied to the second heat generation source 32. Accordingly, the temperature $T_{out}$ of the cooling medium between the radiator 12 and the second heat generation source 32 is expressed by Expression (2) with the temperature $T_{in}$ of the cooling medium before being cooled in the radiator 12 and with the heat radiation quantity Q in Expression (1).

$$T_{out} = T_{in} - \frac{Q}{\rho \cdot c \cdot V} = T_{in} - \frac{q \cdot \left( T_{in} - T_{air} \right)}{\rho \cdot c \cdot V} \qquad \cdots (2)$$

In Expression (2), $\rho$ is a density of the cooling medium, c is a specific heat of the cooling medium, and V is a flow rate of the cooling medium.

The temperature $T_{out}$ of the cooling medium between the radiator 12 and the second heat generation source 32 can be measured with the temperature sensor 51. Accordingly, only the temperature $T_{in}$ is an unknown value in Expression (2). Hence, Expression (2) can be deformed into Expression (3) that represents the unknown temperature $T_{in}$.

$$T_{in} = \frac{\rho \cdot c \cdot V \cdot T_{out} - q \cdot T_{air}}{\rho \cdot c \cdot V - q} \qquad \cdots (3)$$

Thus, the temperature estimation means 21 can calculate, by Expression (3), the temperature $T_{in}$ when the cooling medium flows through the cooling circuit 10 in the negative direction.

The switch means 22 performs control that switches the rotation direction of the motor pump 11 (control for switching the rotation direction). The switch means 22 can determine whether or not to switch the rotation direction of the motor pump 11 based on the temperature of the cooling medium at the outlet of the target heat generation source, out of the heat generation sources, the target heat generation source being positioned at the most downstream side with respect to the outlet of the radiator 12. In the first embodiment, when the cooling medium flows in the positive direction, the determination of switching is made with the temperature $T_{out}$. When the cooling medium flows in the negative direction, the determination of switching is made with the temperature $T_{in}$.

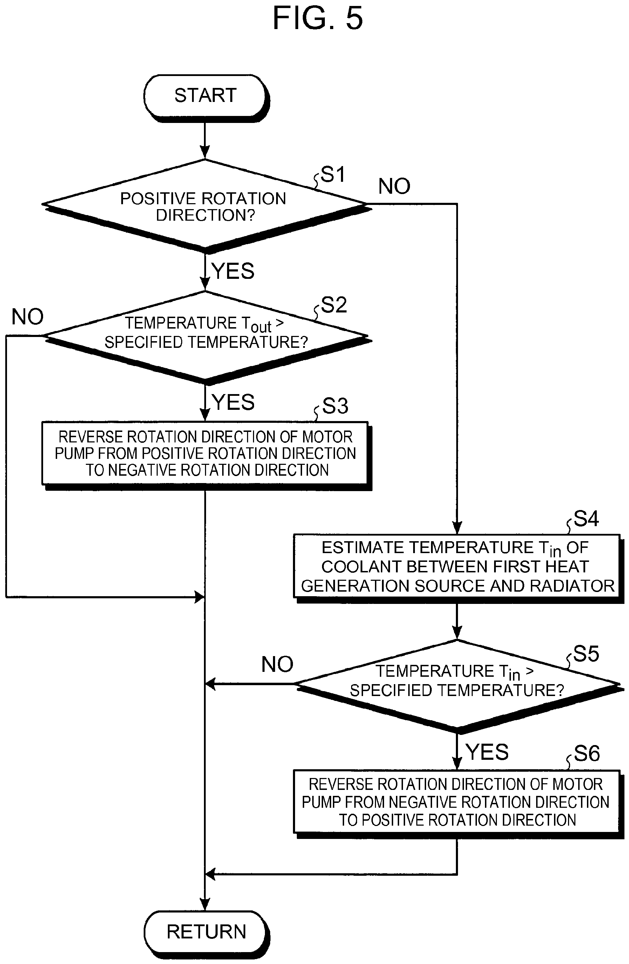

FIG. 5 is a flowchart illustrating a control flow for switching the rotation direction. The ECU 20 performs the control illustrated in FIG. 5.

The ECU 20 determines whether or not the rotation direction of the motor pump 11 is the positive rotation direction (step S1). In step S1, the ECU 20 determines whether or not the cooling medium flows in the positive direction.

When positive determination is made in step S1 (step S1: Yes), the ECU 20 determines whether the temperature $T_{out}$ of the cooling medium at the outlet side of the second heat generation source 32 is higher than a specified temperature (step S2). The specified temperature used in step S2 is a reference temperature determined in accordance with the second heat generation source 32. The reference temperature is set to a specified temperature within the temperature range that enables the second heat generation source 32 to operate normally. For example, the specified temperature in step S2 may be set to a limit temperature (an upper limit of the temperature range) of the second heat generation source 32. When step S2 is performed, it means that the circulation direction of the cooling medium is the positive direction. Accordingly, the cooling medium that cooled the first heat generation source 31 and then cooled the second heat generation source 32 is flowing toward the radiator 12. Therefore, the temperature $T_{out}$ of the cooling medium at the outlet side of the second heat generation source 32 may be assumed to be the temperature of the second heat generation source 32. That is, when the rotation direction of the motor pump 11 is the positive rotation direction, the heat generating state of the second heat generation source 32 can be estimated with the temperature $T_{out}$ of the cooling medium. The limit temperature of the second heat generation source 32 may be stated as a second limit temperature.

When positive determination is made in step S2 (step S2: Yes), the ECU 20 reverses the rotation direction of the motor pump 11 from the positive rotation direction to the negative rotation direction (step S3). In step S3, the ECU 20 outputs to the controller 40 a command signal to switch the rotation direction of the motor pump 11 to the negative rotation direction. When step S3 is performed, the control routine is ended.

When negative determination is made in step S2 (step S2: No), the ECU 20 does not perform the control for switching the rotation direction of the motor pump 11. The control routine is ended with the rotation direction of the motor pump 11 being maintained in the positive rotation direction that is currently asserted.

When negative determination is made in step S1 (step S1: No), it means that the cooling medium is flowing in the negative direction. Accordingly, the ECU 20 estimates the temperature $T_{in}$ of the cooling medium at the outlet side of the first heat generation source 31 (step S4). In step S4, the temperature $T_{in}$ of the cooling medium can be estimated with an estimation method using Expression (3). When step S4 is performed, it means that the cooling medium is flowing in the negative direction. Accordingly, the temperature $T_{in}$ of the cooling medium, which flowed out of the radiator 12, cooled the second heat generation source 32, and then cooled the first heat generation source 31, is estimated.

The ECU 20 determines whether or not the temperature $T_{in}$ estimated in step S4 is higher than a specified temperature (step S5). The specified temperature used in step S5 is a reference temperature determined in accordance with the first heat generation source 31. The reference temperature is set to a specified temperature within the temperature range that enables the first heat generation source 31 to operate normally. For example, the specified temperature in step S5 may be set to a limit temperature (an upper limit of the temperature range) of the first heat generation source 31. When step S5 is performed, it means that the circulation direction of the cooling medium is the negative direction. Accordingly, the cooling medium that cooled the second heat generation source 32 and then cooled the first heat generation source 31 is flowing toward radiator 12. Therefore, the temperature $T_{in}$ of the cooling medium at the outlet side of the first heat generation source 31 may be assumed to be the temperature of the first heat generation source 31. That is, when the rotation direction of the motor pump 11 is the negative rotation direction, the heat generating state of the first heat generation source 31 can be estimated with the temperature $T_{in}$ of the cooling medium. The limit temperature of the first heat generation source 31 may be stated as a first limit temperature.

When positive determination is made in step S5 (step S5: Yes), the ECU 20 reverses the rotation direction of the motor pump 11 from the negative rotation direction to the positive rotation direction (step S6). In step S6, the ECU 20 outputs to the controller 40 a command signal to switch the rotation direction of the motor pump 11 to the positive rotation direction. When step S6 is performed, the control routine is ended.

When negative determination is made in step S5 (step S5: No), the ECU 20 does not perform the control for switching the rotation direction of the motor pump 11. The control routine is ended with the rotation direction of the motor pump 11 being maintained in the negative rotation direction that is currently asserted.

In step S2 and step S5, the ECU 20 determines whether or not the temperature of the cooling medium at the outlet side of the target heat generation source, out of the first heat generation source 31 and the second heat generation source 32, is higher than the specified temperature, the target heat generation source being positioned in the most downstream side with respect to the outlet side of the radiator 12 in the circulation direction of the cooling medium while the motor pump 11 is rotating. When the temperature of the cooling medium is higher than the specified temperature, the ECU 20 can determine that the target heat generation source is in a specified high temperature state. The amount of heat generation in the first heat generation source 31 and the amount of heat generation in the second heat generation source 32 change in accordance with the driving state of the vehicle. Accordingly, the cooling device 1 switches the rotation direction of the motor pump 11 and thereby switches the circulation direction of the cooling medium such that the cooling medium cooled in the radiator 12 is supplied first to the heat generation source that is relatively higher in the necessity of cooling in consideration of the heat generating state of the heat generation sources 31, 32. Hence, the cooling medium at lower temperature can preferentially be supplied to the heat generation source, out of the heat generation sources placed in series in the cooling circuit 10, the heat generation source being relatively higher in the necessity of cooling. The cooling medium at low temperature refers to the cooling medium that is not warmed by other heat generation sources, after flowing out of the radiator 12.

As described in the foregoing, according to the cooling device 1 of the first embodiment, in the cooling circuit 10 including the heat generation sources 31, 32 placed in series, the rotation direction of the motor pump 11, that is, the circulation direction of the cooling medium, can be switched in accordance with the heat generating state of the heat generation sources. This makes it possible to sufficiently demonstrate the cooling performance for the heat generation sources, and to thereby enhance the cooling performance of the entire system.

Furthermore, according to the first embodiment, it is possible to estimate the heat generating state of the heat generation source, out of the heat generation sources, the heat generation source being positioned in the most downstream side with respect to the outlet of the radiator 12, even without provision of two temperature sensors, one at the outlet side and one at the inlet side of each of the heat generation sources. Since one temperature sensor 51 may be provided between the second heat generation source 32 and the radiator 12 in the cooling circuit 10, the number of parts count can be reduced and cost increase can be suppressed.

According to the first embodiment, the cooling performance in the heat generation source positioned in the most downstream side with respect to the outlet of the radiator 12 can be secured by switching the circulation direction of the cooling medium in accordance with the heat generating state of the heat generation sources. That is, it becomes unnecessary to increase the discharge amount of the motor pump 11 on the basis of securing the cooling amount in the heat generation source positioned at the downstream side. This makes it possible to reduce the output of the motor pump 11. Furthermore, it also becomes unnecessary to increase the volume of the component members including the heat generation sources and to increase the flow rate of the cooling medium for the purpose of securing the cooling performance in the heat generation sources. This makes it possible to downsize the heat generation sources.

The placement location of the motor pump 11 in the cooling circuit 10 is not limited to the location illustrated in FIG. 1. Since the motor pump 11 is not a cooling object, it is naturally understood that the motor pump 11 is not included in the heat generation sources placed in the cooling circuit 10. Accordingly, the motor pump 11 may be placed between the radiator 12 and the first heat generation source 31, or may be placed between the second heat generation source 32 and the radiator 12. In short, the first heat generation source 31 and second heat generation source 32 may be assumed to be the heat generation sources placed in the same component member, the heat generation sources being relatively at the most upstream side and at the most downstream side, respectively.

First Example of First Embodiment

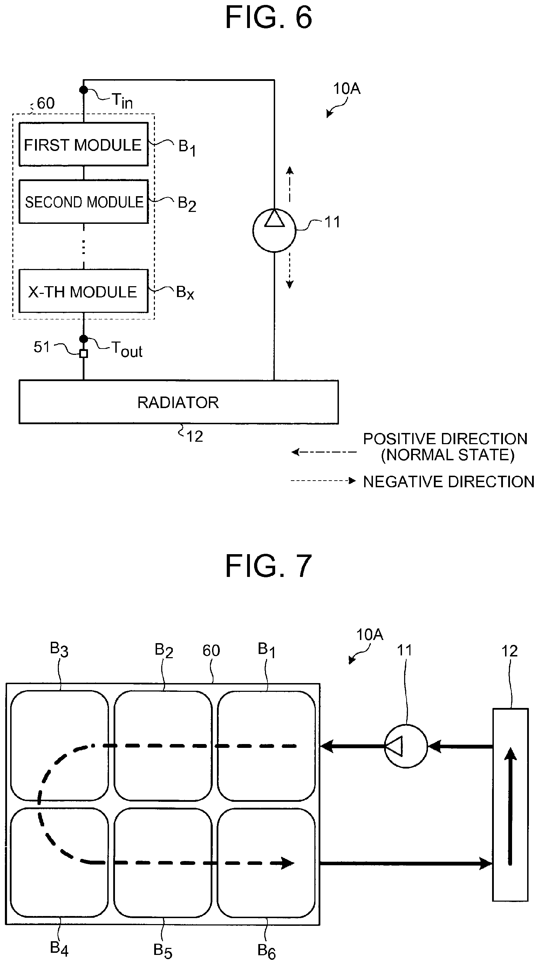

A description is given of a first example with reference to FIGS. 6 to 7. In the first example, the cooling device 1 of the first embodiment is applied to an electric vehicle. FIG. 6 is a schematic view illustrating one example of a cooling circuit 10A mounted on the electric vehicle. FIG. 7 is a schematic view illustrating one example of a battery unit 60 mounted on the electric vehicle.

As illustrated in FIG. 6, the cooling circuit 10A mounted on the electric vehicle includes a battery unit 60 having total X battery modules ($B_1$ to $B_X$) placed in series, the battery modules being the heat generation sources. The battery unit 60 has a plurality of batteries that supply electric power to a motor mounted on the electric vehicle. The batteries are electrically connected in series. The cooling circuit 10A supplies a cooling medium to the battery unit 60 while cooling the cooling medium that traveled through each of the modules $B_1$ to $B_X$ with the radiator 12. When the motor pump 11 rotates in the positive rotation direction to cause the cooling medium to flow in the positive direction, the cooling medium flows through each of the modules $B_1$ to $B_X$ in series from a first module $B_1$ and a second module $B_2$ to an X-th module $B_X$ in the battery unit 60. Meanwhile, when the motor pump 11 rotates in the negative rotation direction to cause the cooling medium to flow in the negative direction, the cooling medium flows from the X-th module $B_X$ to the first module $B_1$ in the battery unit 60. For example, in the case of the battery unit 60 having total six battery modules (X= 6) as illustrated in FIG. 7, the first to sixth modules $B_1$ to $B_6$ are connected in series to allow the cooling medium to flow therethrough. The temperature sensor 51 is omitted in FIG. 7. The modules $B_1$ to $B_X$ are each constituted of a plurality of battery cells.

In the cooling circuit 10A, the temperature sensor 51 is placed between an X-th module $B_X$ side of the battery unit 60 and the radiator 12. The ECU 20 switches the rotation direction of the motor pump 11 based on the temperature $T_{out}$ at the outlet side of the X-th module $B_X$ when the cooling medium flows in the positive direction, and based on the temperature $T_{in}$ at the outlet side of the first module $B_1$ when the cooling medium flows in the negative direction. In the first example, the first module $B_1$ corresponds to the first heat generation source 31, and the X-th module $B_X$ corresponds to the second heat generation source 32. That is, when the cooling medium flows in the positive direction, the X-th module $B_X$ serves as a target heat generation source. Accordingly, the temperature $T_{out}$ of the cooling medium is assumed to be the temperature of the X-th module $B_X$. When the cooling medium flows in the negative direction, the first module $B_1$ serves as a target heat generation source. Accordingly, the temperature $T_{in}$ of the cooling medium is assumed to be the temperature of the first module $B_1$.

A description is now given of a correspondence relation between the switching control flow in the first example and the control flow illustrated in FIG. 5. In step S2 of FIG. 5, the ECU 20 determines whether or not the temperature $T_{out}$ of the cooling medium at the outlet side of the X-th module $B_X$ is equal to or above a specified temperature. The specified temperature (reference temperature) used in step S2 is set to a specified temperature within the temperature range that enables the X-th module $B_X$ to operate normally. For example, the specified temperature of step S2 may be set to a limit temperature of the X-th module $B_X$. In step S4 of FIG. 5, the ECU 20 estimates the temperature $T_{in}$ of the cooling medium between the first module $B_1$ and the radiator 12 in the state where the cooling medium is flowing in the negative direction. In step S5 of FIG. 5, the ECU 20 determines whether or not the temperature $T_{in}$ of the cooling medium flowing from the first module $B_1$ to the radiator 12 is higher than a specified temperature. The specified temperature (reference temperature) used in step S5 is set to a specified temperature within the temperature range that enables the first module $B_1$ to operate normally. For example, the specified temperature of step S5 may be set to a limit temperature of the first module $B_1$. In the first example, the modules $B_1$ to $B_X$ have the same configuration. Accordingly, the limit temperature of the first module $B_1$ is equal to the limit temperature of the X-th module $B_X$. Therefore, the specified temperature used in step S2 and the specified temperature used in step S5 can be set to the same temperature.

According to the first example, a difference in cooling performance between the first module $B_1$ and the X-th module $B_X$ can be decreased. In the battery unit 60, the modules are electrically connected in series. If heat causes decline in battery life in the module at the most downstream side, and a battery capacity is degraded thereby, the battery capacity of the entire battery unit 60 may be degraded. However, according to the first example, a difference between degradation in performance of the battery caused by heat in the first module $B_1$ and degradation in performance of the battery caused by heat in the X-th module $B_X$ is decreased. The degradation in performance includes degradation in the battery capacity due to deterioration (decline in battery life), and temporary degradation in battery capacity at the time of high temperature. Accordingly, it is possible to decrease the degradation in battery capacity as the entire battery unit 60 in which the batteries are electrically connected in series. As a result, electricity efficiency is drastically improved.

Second Example of First Embodiment

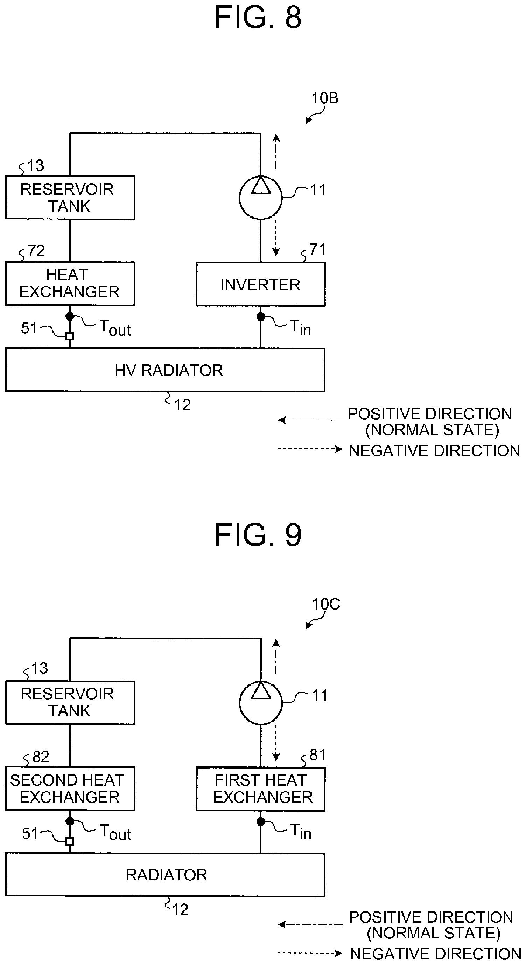

A description is given of a second example with reference to FIG. 8. In the second example, the cooling device 1 of the first embodiment is applied to a hybrid vehicle. FIG. 8 is a schematic view illustrating one example of a cooling circuit 10B mounted on the hybrid vehicle.

As illustrated in FIG. 8, in the cooling circuit 10B mounted on the hybrid vehicle, an inverter 71 and a heat exchanger 72 are placed in series as the heat generation sources. The inverter 71 is electrically connected with a battery that supplies electric power to a motor that is a power source of the hybrid vehicle. The heat exchanger 72 performs heat exchange between an oil (transaxle oil) supplied to a transaxle that is a power transmission device of the hybrid vehicle and the cooling medium circulating in the cooling circuit 10B. The cooling medium flowing in the cooling circuit 10B is coolant. In the second example, the inverter 71 corresponds to the first heat generation source 31, and the heat exchanger 72 corresponds to the second heat generation source 32. The temperature of the heat exchanger 72 rises due to the transaxle oil. More specifically, when the cooling medium flows in the positive direction, the inverter 71 serves as a target heat generation source. Hence, the temperature $T_{out}$ of the cooling medium is assumed to be the temperature (oil temperature of transaxle oil) of the heat exchanger 72. When the cooling medium flows in the negative direction, the inverter 71 serves as a target heat generation source. Accordingly, the temperature $T_{in}$ of the cooling medium is assumed to be the temperature of the inverter 71. In the cooling circuit 10B, the temperature sensor 51 is placed between the heat exchanger 72 and the radiator 12. A variation of the amount of heat generation in the transaxle that is a supply destination of the transaxle oil, which exchanges heat in the heat exchanger 72, is larger than a variation of the amount of heat generation in the inverter 71. Accordingly, measuring the temperature of the cooling medium at the side of the heat exchanger 72 with the temperature sensor 51 allows acquisition of an accurate temperature of the heat exchanger 72 that is relatively large in variation of the amount of heat generation. The cooling circuit 10B includes a radiator (HV radiator) 12 dedicated for the cooling medium and a reservoir tank 13 that can temporarily store the cooling medium.

A description is now given of a correspondence relation between a switching control flow in a second example and the control flow illustrated in FIG. 5. In step S2 of FIG. 5, the ECU 20 determines whether or not the temperature $T_{out}$ of the cooling medium at the outlet side of the heat exchanger 72 is higher than a specified temperature. The specified temperature used in step S2 is set based on a limit oil temperature $T_{oil\_max}$ of the transaxle oil that exchanges heat with the cooling medium in the heat exchanger 72. For example, the specified temperature of step S2 may be set to the limit oil temperature $T_{oil\_max}$ of the transaxle oil. The limit oil temperature $T_{oil\_max}$ of the transaxle oil is an upper limit of the oil temperature set based on an upper limit of the temperature range that enables the transaxle to operate normally. When the ECU 20 performs step S3 of FIG. 5, the circulation direction of the cooling medium is reversed, and the cooling medium at low temperature flowing out of the HV radiator 12 is supplied to the heat exchanger 72 ahead of the inverter 71. Accordingly, the amount of heat exchange in the heat exchanger 72 can be increased from the amount before the rotation direction of the motor pump 11 is reversed. As a result, the cooling amount of the transaxle oil can be increased. Furthermore, in step S4 of FIG. 5, the ECU 20 estimates the temperature $T_{in}$ of the cooling medium flowing between the inverter 71 and the radiator 12 in the state where the cooling medium is flowing in the negative direction. In step S5 of FIG. 5, the ECU 20 determines whether or not the temperature $T_{in}$ of the cooling medium flowing out of the inverter 71 is higher than a specified temperature. The specified temperature used in step S5 is set based on a limit temperature $T_{inv\_max}$ of an inverter element. The limit temperature $T_{inv\_max}$ of the inverter element is an upper limit of the temperature range that enables the inverter element to operate normally. When the ECU 20 performs step S6 of FIG. 5, the circulation direction of the cooling medium is reversed, and the cooling medium at low temperature flowing out of the HV radiator 12 is supplied to the inverter 71 ahead of the heat exchanger 72. This makes it possible to increase the cooling amount of the inverter 71 from the cooling amount before the rotation direction of the motor pump 11 is reversed.

According to the second example, even in a high vehicle speed state where the vehicle travels at high speed or in a heavy load state where the vehicle travels on a climbing road, a large difference is provided between the oil temperature of the transaxle oil and the limit oil temperature $T_{oil\_max}$ with the oil temperature of the transaxle oil being lower than the limit oil temperature $T_{oil\_max}$, and a large difference is provided between the temperature of the inverter element and the limit temperature $T_{inv\_max}$ with the temperature of the inverter element being lower than the limit temperature $T_{inv\_max}$. In the high vehicle speed state in particular, the oil temperature of the transaxle oil is considerably different from the limit oil temperature $T_{oil\_max}$, which enhances the cooling performance of the transaxle.

Third Example of First Embodiment

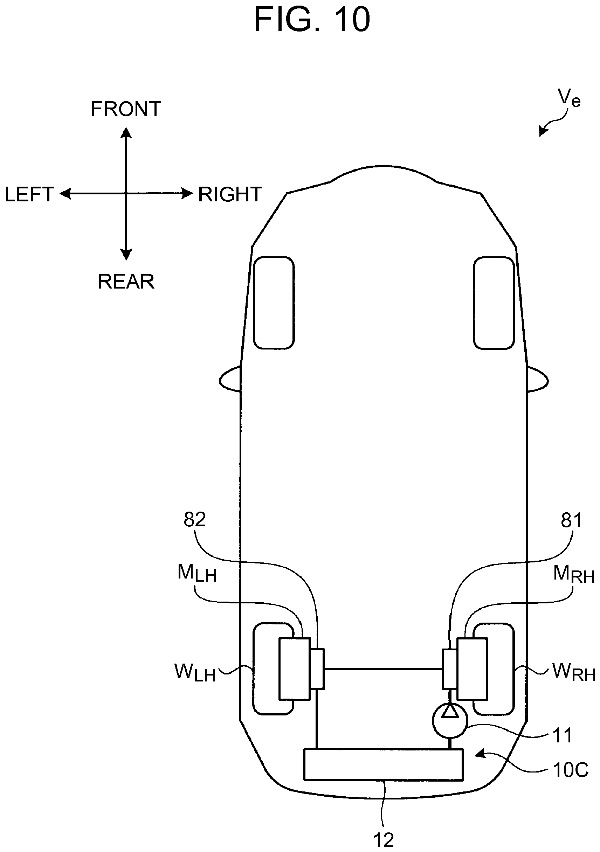

A description will be given of a third example with reference to FIGS. 9 to 10. In the third example, the cooling device 1 of the first embodiment is applied to an in-wheel motor vehicle. FIG. 9 is a schematic view illustrating one example of a cooling circuit 10C mounted on an in-wheel motor vehicle. FIG. 10 is a schematic view illustrating one example of the in-wheel motor vehicle.

As illustrated in FIGS. 9 and 10, in the cooling circuit 10C mounted on the in-wheel motor vehicle, a first heat exchanger 81 and a second heat exchanger 82 are placed in series as the heat generation sources. The first heat exchanger 81 performs heat exchange between an oil of an in-wheel motor (hereinafter referred to as "first motor unit") $M_{RH}$ provided in a rear right wheel $W_{RH}$ of a vehicle Ve and the cooling medium circulating through the cooling circuit 10C. The second heat exchanger 82 performs heat exchange between an oil of an in-wheel motor (hereinafter referred to as " second motor unit") $M_{LH}$ provided in a rear left wheel $W_{LH}$ that is a driving wheel different from the first motor unit $M_{RH}$ and the cooling medium circulating through the cooling circuit 10C. The cooling medium flowing in the cooling circuit 10C is coolant. In the third example, the first heat exchanger 81 corresponds to the first heat generation source 31, and the second heat exchanger 82 corresponds to the second heat generation source 32. The temperature of the first heat exchanger 81 rises due to the oil of the first motor unit $M_{RH}$, and the temperature of the second heat exchanger 82 rises due to the oil of the second motor unit $M_{LH}$. More specifically, when the cooling medium flows in the positive direction, the second heat exchanger 82 serves as a target heat generation source. Hence, the temperature $T_{out}$ of the cooling medium is assumed to be the temperature of the second heat exchanger 82 (oil temperature of the oil of the second motor unit $M_{LH}$). When the cooling medium flows in the negative direction, the first heat exchanger 81 serves as a target heat generation source. Hence, the temperature $T_{in}$ of the cooling medium is assumed to be the temperature of the first heat exchanger 81 (oil temperature of the oil of the first motor unit $M_{RH}$). In the cooling circuit 10C, the temperature sensor 51 is placed between the second heat exchanger 82 and the radiator 12. The cooling circuit 10C includes a reservoir tank 13. The temperature sensor 51 is omitted in FIG. 10.

A description is now given of a correspondence relation between a switching control flow in the third example and the control flow illustrated in FIG. 5. In step S2 of FIG. 5, the ECU 20 determines whether or not the temperature $T_{out}$ of the cooling medium flowing between the second heat exchanger 82 and the radiator 12 is higher than a specified temperature. The specified temperature used in step S2 is based on a limit oil temperature $T_{LH\_max}$ of the oil of the second motor unit $M_{LH}$ that exchanges heat with the cooling medium in the second heat exchanger 82. For example, the specified temperature of step S2 may be set to the limit oil temperature $T_{LH\_max}$ of the oil of the second motor unit $M_{LH}$. The limit oil temperature $T_{LH\_max}$ is an upper limit of the oil temperature set based on an upper limit (limit temperature of a magnet or a coil that constitutes the in-wheel motor) in the temperature range that enables the second motor unit $M_{LH}$ to operate normally. When the ECU 20 performs step S3 of FIG. 5, the circulation direction of the cooling medium is reversed, and the cooling medium at low temperature flowing out of the radiator 12 is supplied to the second heat exchanger 82 ahead of the first heat exchanger 81. Accordingly, the amount of heat exchange in the second heat exchanger 82 can be increased from the amount before the rotation direction of the motor pump 11 is reversed. As a result, the cooling amount of the oil of the second motor unit $M_{LH}$ can be increased. Furthermore, in step S4 of FIG. 5, the ECU 20 estimates the temperature $T_{in}$ of the cooling medium between the first heat exchanger 81 and the radiator 12 in the state where the cooling medium is flowing in the negative direction. In step S5 of FIG. 5, the ECU 20 determines whether or not the temperature $T_{in}$ of the cooling medium is higher than a specified temperature. The specified temperature used in step S5 is set based on a limit oil temperature $T_{RH\_max}$ of the oil of the first motor unit $M_{RH}$ that exchanges heat with the cooling medium in the first heat exchanger 81. For example, the specified temperature of step S5 may be set to the limit oil temperature $T_{RH\_max}$ of the oil of the first motor unit $M_{RH}$. The limit oil temperature $T_{RH\_max}$ is an upper limit of the oil temperature set based on an upper limit (limit temperature of a magnet or a coil that constitutes the in-wheel motor) in the temperature range that enables the first motor unit $M_{RH}$ to operate normally. When the ECU 20 performs step S6 of FIG. 5, the circulation direction of the cooling medium is reversed, and the cooling medium at low temperature flowing out of the radiator 12 is supplied to the first heat exchanger 81 ahead of the second heat exchanger 82. Accordingly, the amount of heat exchange in the first heat exchanger 81 can be increased from the amount before the rotation direction of the motor pump 11 is reversed. As a result, the cooling amount of the oil of the first motor unit $M_{RH}$ can be increased. In the third example, the motor units $M_{RH}$, $M_{LH}$ have the same configuration. Hence, the limit oil temperature $T_{RH\_max}$ of the oil of the first motor unit $M_{RH}$ and the limit oil temperature $T_{LH\_max}$ of the oil of the second motor unit $M_{LH}$ become the same temperature. Therefore, the specified temperature used in step S2 and the specified temperature used in step S5 can be set to the same temperature.

According to the third example, a difference in heat exchange performance between the first heat exchanger 81 and the second heat exchanger 82, that is, a difference in cooling performance between the right and left in-wheel motors is decreased. This makes it possible to suppress the situation where a torque that can be output from each of the motor units $M_{RH}$, $M_{LH}$ is restricted due to heat. It is also possible to suppress the situation where the temperature of each of the motor units $M_{RH}$, $M_{LH}$ rises to cause increase in copper loss. As a result, electricity efficiency of the vehicle can be enhanced.

Second Embodiment

The cooling device 1 in a second embodiment is configured to be able to determine that a target heat generation source is in a specified high temperature state by using both the temperature $T_{in}$ of the cooling medium flowing into the heat generation sources, and the temperature $T_{out}$ of the cooling medium flowing out of the heat generation sources in the state where the cooling medium circulates in an identical direction. In the description of the second embodiment, the component members identical to those in the first embodiment are designated by identical reference signs to omit the description thereof.

First, the cooling device 1 in the second embodiment is configured to include the cooling circuit 10 that is same as the cooling circuit 10 in the first embodiment. In the second embodiment, the cooling circuit 10 illustrated in FIG. 1 is also provided.

In the ECU 20 of the second embodiment, the temperature estimation means 21 estimates the temperature $T_{in}$ of the cooling medium between the first heat generation source 31 and the radiator 12 regardless of the circulation direction of the cooling medium. The temperature $T_{in}$ is estimated by a calculation method in which expressions used in the case where the cooling medium flows in the positive direction are different from expressions used in the case where the cooling medium flows in the negative direction. The method for estimating the temperature $T_{in}$ in the state where the cooling medium flows in the negative direction is the same as the estimation method in the first embodiment. The method involves calculation by Expressions (1) to (3). The method for estimating the temperature $T_{in}$ in the state where the cooling medium flows in the positive direction uses calculation by Expressions (4) to (5). FIGS. 2 to 3 are also applied to the method for estimating the temperature $T_{in}$ when the cooling medium flows in the positive direction.

When the cooling medium flows in the positive direction, the cooling medium at temperature $T_{in}$ flows from the radiator 12 into the first heat generation source 31. In this case, the heat radiation quantity Q of the radiator 12 is expressed by Expression (4).

$$Q = q \cdot \left(T_{out} - T_{air}\right) \qquad \cdots (4)$$

In Expression (4), q is a radiation performance of the radiator 12, $T_{air}$ is an ambient temperature measured with the ambient temperature sensor 53, and $T_{out}$ is a temperature of the cooling medium measured with the temperature sensor 51.

Furthermore, when the cooling medium flows in the positive direction, the cooling medium flowing out of the radiator 12 is first supplied to the first heat generation source 31. Accordingly, the temperature $T_{in}$ of the cooling medium between the radiator 12 and the first heat generation source 31 is expressed by Expression (5) using the temperature $T_{out}$ of the cooling medium before being cooled in the radiator 12 and the heat radiation quantity Q in Expression (4).

$$T_{in} = T_{out} - \frac{Q}{\rho \cdot c \cdot V} = T_{out} - \frac{q \cdot \left(T_{out} - T_{air}\right)}{\rho \cdot c \cdot V} \qquad \cdots (5)$$

In Expression (5), $\rho$ is a density of the cooling medium, c is a specific heat of the cooling medium, and V is a flow rate of the cooling medium.

Thus, the temperature estimation means 21 can calculate, by Expression (5), the temperature $T_{in}$ when the cooling medium is flowing in the positive direction.

The ECU 20 can determine whether or not the target heat generation sources are in the state of high temperature beyond a specified reference, with use of a temperature difference between the temperature $T_{in}$ and the temperature $T_{out}$. Specifically, the ECU 20 determines that the second heat generation source 32 as a target heat generation source is in the state of high temperature beyond the specified reference, when the motor pump 11 rotates in the positive rotation direction, and a first temperature difference ($T_{out}$ - $T_{in}$) is larger than a specified value, the first temperature difference being a value obtained by subtracting the temperature $T_{in}$ at the upstream side from the temperature $T_{out}$ at the downstream side. The ECU 20 also determines that the first heat generation source 31 as a target heat generation source is in the state of high temperature beyond the specified reference, when the motor pump 11 rotates in the negative rotation direction, and a second temperature difference ($T_{in}$ - $T_{out}$) is larger than a specified value, the second temperature difference being a value obtained by subtracting the temperature $T_{out}$ at the upstream side from the temperature $T_{in}$ at the downstream side. When determining that the target heat generation source is in the high temperature state with use of the temperature difference of the cooling medium in this way, the ECU 20 performs control for switching the rotation direction of the motor pump 11. In the second embodiment, when determining whether or not the first temperature difference or the second temperature difference is higher than the specified value, the ECU 20 is configured to use a temperature map indicating the relation between the temperature $T_{in}$ and $T_{out}$.

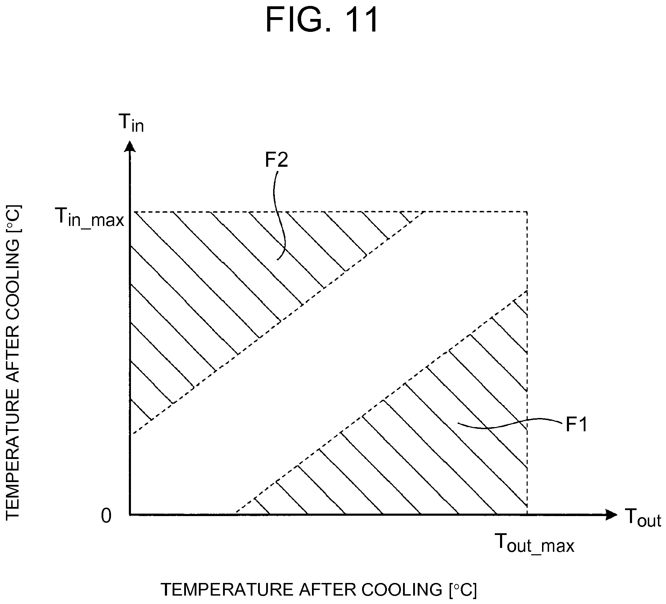

FIG. 11 is the temperature map illustrating the relation between the temperature $T_{in}$ of the cooling medium at the first heat generation source 31 side and the temperature $T_{out}$ of the cooling medium at the second heat generation source 32 side. In the temperature map illustrated in FIG. 11, a vertical axis represents the temperature $T_{in}$ and a horizontal axis represents the temperature $T_{out}$. The ECU 20 determines whether or not a parameter defined from the temperature $T_{out}$ and the temperature $T_{in}$ is in a specified region on the temperature map illustrated in FIG. 11. When the motor pump 11 is rotating in the positive rotation, the ECU 20 determines whether or not the parameter is in a region F1 where it can be determined that the first temperature difference ($T_{out}$ - $T_{in}$) is larger than the specified value. Meanwhile, when the motor pump 11 is rotating in the negative rotation, the ECU 20 determines whether or not the parameter is in a region F2 where it can be determined that the second temperature difference ($T_{in}$ - $T_{out}$) is larger than the specified value. Here, the region F1 represents a region in which the temperature $T_{out}$ at the downstream side is considerably higher than the temperature $T_{in}$ at the upstream side during positive rotation of the motor pump 11, and therefore the rotation direction of the motor pump 11 needs to be reversed to the negative rotation direction to prevent the temperature $T_{out}$ from exceeding a limit temperature $T_{out\_max}$ of the cooling medium. The limit temperature $T_{out\_max}$ of the cooling medium is a temperature set based on a limit temperature of the second heat generation source 32. The region F2 represents a region in which the temperature $T_{in}$ at the downstream side is considerably higher than the temperature $T_{out}$ at the upstream side during negative rotation of the motor pump 11, and therefore the rotation direction of the motor pump 11 needs to be reversed to the positive rotation direction to prevent the temperature $T_{in}$ from exceeding a limit temperature $T_{in\_max}$ of the cooling medium. The limit temperature $T_{in\_max}$ is a temperature set based on a limit temperature of the first heat generation source 31. The limit temperature $T_{out\_max}$ is a temperature set based on the limit temperature of the second heat generation source 32.

Immediately after the rotation direction of the motor pump 11 is switched from the positive rotation direction to the negative rotation direction, the temperature of the second heat generation source 32 at the upstream side is higher than the temperature of the first heat generation source 31 at the downstream side. However, as the motor pump 11 continues to be in the negative rotating state, the temperature of the first heat generation source 31 at the downstream side becomes higher than the temperature of the second heat generation source 32 at the upstream side. Accordingly, the temperature $T_{in}$ becomes higher than the temperature $T_{out}$, which increases the second temperature difference ($T_{in}$ - $T_{out}$). Similarly, immediately after the rotation direction of the motor pump 11 is switched from the negative rotation direction to the positive rotation direction, the temperature of the first heat generation source 31 at the upstream side is higher than the temperature of the second heat generation source 32 at the downstream side. However, as the motor pump 11 continues to be in the positive rotating state, the temperature of the second heat generation source 32 at the downstream side becomes higher than the temperature of the first heat generation source 31 at the upstream side. Accordingly, the temperature $T_{out}$ becomes higher than the temperature $T_{in}$, which increases the first temperature difference ($T_{out}$ - $T_{in}$). When a variation of the amount of heat generation in the second heat generation source 32 is identical to a variation of the amount of heat generation in the first heat generation source 31, the specified value used in comparison with the first temperature difference is set to the same value as the specified value used in comparison with the second temperature difference. When the variation of the amount of heat generation in the first heat generation source 31 is different from the variation of the amount of heat generation in the second heat generation source 32, the specified value used in comparison with the first temperature difference is set to a value different from the specified value used in comparison with the second temperature difference.

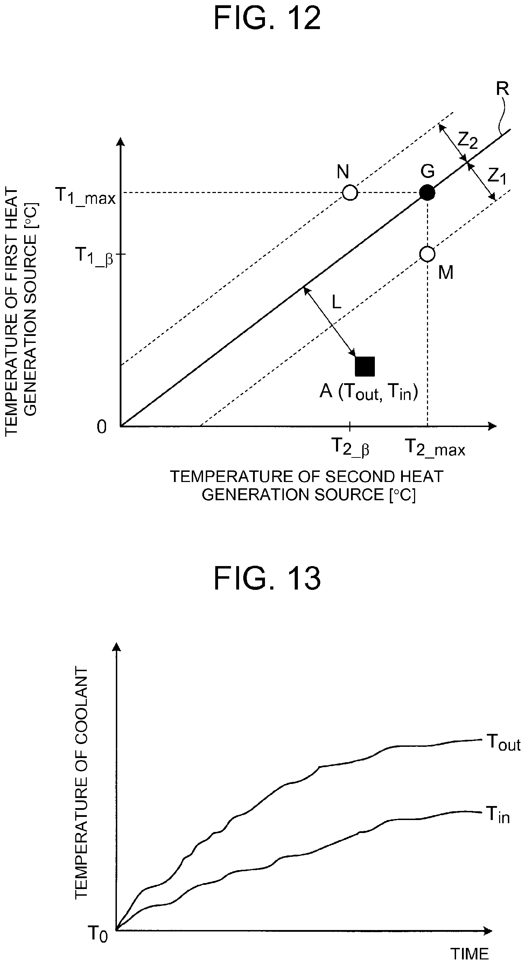

Aside from the method involving use of the temperature map of FIG. 11, the ECU 20 of the second embodiment may use a method involving determination of a point (hereinafter referred to as "target point") on a temperature map. The point is defined from the temperature $T_{in}$ of the cooling medium estimated with the temperature estimation means 21 and the temperature $T_{out}$ of the cooling medium measured with the temperature sensor 51, the temperature $T_{in}$ being assumed to be the temperature of the first heat generation source 31, the temperature $T_{out}$ being assumed to be the temperature of the second heat generation source 32. The temperature map used in this case is a map (illustrated in FIG. 12) indicating the relation between the temperature of the first heat generation source 31 and the temperature of the second heat generation source 32.

FIG. 12 is an explanatory view illustrating the temperature map used in the second embodiment. In the temperature map illustrated in FIG. 12, a vertical axis represents the temperature of the first heat generation source 31, and a horizontal axis represents the temperature of the second heat generation source 32. In the temperature map illustrated in FIG. 12, the temperature $T_{in}$ corresponds to the temperature of the first heat generation source 31, and the temperature $T_{out}$ corresponds to the temperature of the second heat generation source 32. A target point A on the map is a target point determined by the switch means 22, the target point being constituted of the temperature $T_{in}$ and the temperature $T_{out}$. The target point A is used when the ECU 20 determines whether or not to switch the rotation direction of the motor pump 11. A point G on the map is a point constituted of a limit temperature $T_{1\_max}$ of the first heat generation source 31 and a limit temperature $T_{2\_max}$ of the second heat generation source 32. A reference straight line R is a straight line connecting the point G and a point where the temperatures reach "0°C." A distance L is the distance from the target point A to the reference straight line R. A point M is a point constituted of a specified temperature (hereinafter referred to as "first temperature") $T_{1\_\beta}$ within a temperature range of 70% to 90% of the limit temperature $T_{1\_max}$ of the first heat generation source 31 and the limit temperature $T_{2\_max}$ of the second heat generation source 32. A specified value $Z_1$ is the distance from the point M to the reference straight line R. A point N is a point constituted of the limit temperature $T_{1\_max}$ of the first heat generation source 31 and a specified temperature (hereinafter referred to as "second temperature") $T_{2\_\beta}$ within a temperature range of 70% to 90% of the limit temperature $T_{2\_max}$ of the second heat generation source 32. A specified value $Z_2$ is the distance from the point N to the reference straight line R.

A description is now given of a displacement of the target point A on the temperature map illustrated in FIG. 12. First, when the cooling medium flows in the positive direction, the cooling medium cooled in the radiator 12 is supplied to the first heat generation source 31 and is then supplied to the second heat generation source 32. As a consequence, the temperature $T_{out}$ is higher than the temperature $T_{in}$. In this case, the temperature $T_{out}$ rises so as to approach the limit temperature $T_{2\_max}$ of the second heat generation source 32 with a lapse of time. Furthermore, as illustrated in FIG. 13, the temperature $T_{in}$ and the temperature $T_{out}$ have an initial temperature $T_0$, and as traveling time or charging time prolongs with a lapse of time, a temperature difference ($T_{out}$ - $T_{in}$) tends to become larger ($T_{out}$ > $T_{in}$). Accordingly, as the cooling medium continues to flow in the positive direction, the target point A is displaced to be away from the reference straight line R and to approach the limit temperature $T_{2\_max}$ of the second heat generation source 32 on the temperature map of FIG. 12. In the state where the target point A is close to the limit temperature $T_{2\_max}$ of the second heat generation source 32, the second heat generation source 32 is in the state considerably higher in temperature than the first heat generation source 31. Hence, the target point A is largely distanced from the reference straight line R. This state may be the state (specified high temperature state) where the necessity of cooling the second heat generation source 32 is higher than the necessity of cooling the first heat generation source 31. The temperature difference herein is expressed as an absolute value.

Contrary to this, when the cooling medium flows in the negative direction, the cooling medium cooled in the radiator 12 is supplied to the second heat generation source 32 and is then supplied to the first heat generation source 31. As a consequence, the temperature $T_{in}$ is higher than the temperature $T_{out}$. In this case, the temperature $T_{in}$ rises so as to approach the limit temperature $T_{1\_max}$ of the first heat generation source 31 with a lapse of time. Furthermore, although the temperature $T_{in}$ and the temperature $T_{out}$ in the example illustrated in FIG. 13 are reversed in this example, a temperature difference ($T_{in}$ - $T_{out}$) between the temperature $T_{in}$ and the temperature $T_{out}$ also tends to become larger with a lapse of time ($T_{in}$ > $T_{out}$) when the cooling medium flows in the negative direction. Accordingly, as the cooling medium continues to flow in the negative direction, the target point A is displaced to be distanced from the reference straight line R and to approach the limit temperature $T_{1\_max}$ of the first heat generation source 31 on the temperature map of FIG. 12. In the state where the target point A is close to the limit temperature $T_{1\_max}$ of the first heat generation source 31, the first heat generation source 31 is in the state considerably higher in temperature than the second heat generation source 32. Hence, the target point A is largely distanced from the reference straight line R. This state may be the state (specified high temperature state) where the necessity of cooling the first heat generation source 31 is higher than the necessity of cooling the second heat generation source 32.

Here, the switch means 22 determines whether or not the distance L between the target point A and the reference straight line R is larger than a specified value on the temperature map. Based on the result of determination, whether or not to reverse the rotation direction of the motor pump 11 is determined in the second embodiment. The temperature map can be used regardless of whether the circulation direction of the cooling medium is the positive direction or the negative direction.

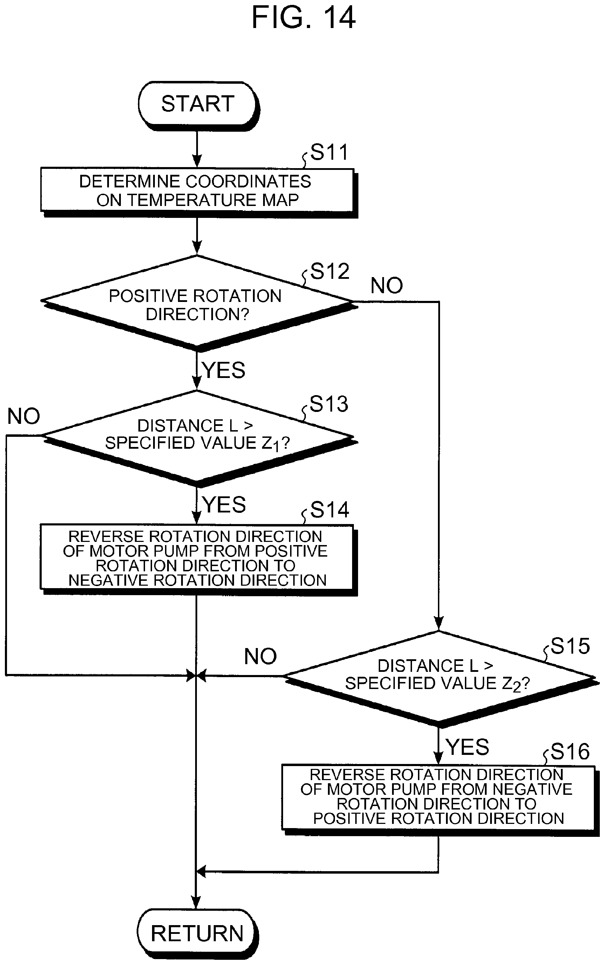

FIG. 14 is a flowchart illustrating a control flow for switching the rotation direction in the second embodiment. The ECU 20 performs the control flow illustrated in FIG. 14. In the description of the control flow, the reference signs on the temperature map of the FIG. 12 will be used.

The ECU 20 determines the target point A constituted of the temperature $T_{in}$ and the temperature $T_{out}$ of the cooling medium on the temperature map that corresponds to the first heat generation source 31 and the second heat generation source 32 (step S11). The temperature $T_{out}$ of the cooling medium can be acquired by the temperature sensor 51. The temperature $T_{in}$ of the cooling medium can be estimated with the estimation method described before.

The ECU 20 determines whether or not the rotation direction of the motor pump 11 is the positive rotation direction (step S12). In step S12, the ECU 20 determines whether or not the cooling medium flows in the positive direction.

When positive determination is made in step S12 (step S12: Yes), the ECU 20 determines whether or not the distance L between the target point A and the reference straight line R on the temperature map is larger than the specified value $Z_1$ (step S13). The specified value $Z_1$ used in step S13 is a first specified value (reference temperature), which is set based on the limit temperature $T_{2\_max}$ of the second heat generation source 32 and the first temperature $T_{1\_\beta}$ about the first heat generation source 31.

When positive determination is made in step S13 (step S13: Yes), the ECU 20 reverses the rotation direction of the motor pump 11 from the positive rotation direction to the negative rotation direction (step S14). When the circulation direction of the cooling medium is reversed in step S14, the target point A starts to be displaced from the state of "$T_{out}$ > $T_{in}$" to the state of approaching the reference straight line R on the temperature map. As a result, the distance L decreases. When step S14 is performed, the control routine is ended.

When negative determination is made in step S13 (step S13: No), the ECU 20 does not perform the control for switching the rotation direction of the motor pump 11. The control routine is ended with the rotation direction of the motor pump 11 being maintained in the positive rotation direction that is currently asserted.

When negative determination is made in step S12 (step S12: No), the ECU 20 determines whether or not the distance L between the target point A and the reference straight line R on the temperature map is larger than the specified value $Z_2$ (step S15). The specified value $Z_2$ used in step S15 is a second specified value (reference temperature), which is set based on the limit temperature $T_{1\_max}$ of the first heat generation source 31 and the second temperature $T_{2\_\beta}$ about the second heat generation source 32.

When positive determination is made in step S15 (step S15: Yes), the ECU 20 reverses the rotation direction of the motor pump 11 from the negative rotation direction to the positive rotation direction (step S16). When the circulation direction of the cooling medium is reversed in step S16, the target point A starts to be displaced from the state of "$T_{in}$ > $T_{out}$" to the state of approaching the reference straight line R on the temperature map. As a result, the distance L decreases. When step S16 is performed, the control routine is ended.

When negative determination is made in step S15 (step S15: No), the ECU 20 does not perform the control for switching the rotation direction of the motor pump 11. The control routine is ended with the rotation direction of the motor pump 11 being maintained in the negative rotation direction that is currently asserted.

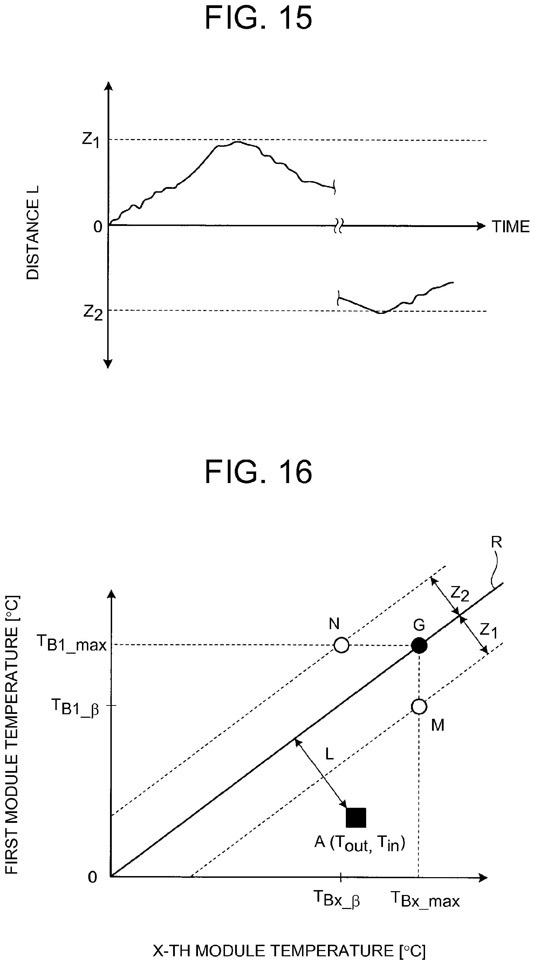

The ECU 20 repeatedly performs the control flow illustrated in the FIG. 14 while the vehicle is traveling. Accordingly, as illustrated in FIG. 15, the distance L on the temperature map changes so as to approach the specified value $Z_1$ when the motor pump 11 rotates in the positive rotation direction. When the motor pump 11 rotates in the negative rotation direction, the distance L changes so as to approach the specified value $Z_2$. The vertical axis illustrated in FIG. 15 is an absolute value of the distance L.

As described in the foregoing, according to the cooling device 1 of the second embodiment, the circulation direction of the cooling medium can be switched in accordance with the heat generating state of the heat generation sources 31, 32 in the cooling circuit 10 including the heat generation sources placed in series as in the first embodiment. This makes it possible to sufficiently demonstrate the cooling performance for the heat generation sources, which results in enhancement in the cooling performance of the entire system.

Fourth Example of Second Embodiment

A description is given of a fourth example with reference to FIG. 16. In the fourth example, the cooling device 1 of the second embodiment is applied to an electric vehicle. FIG. 16 is a map schematically illustrating one example of a temperature map used in the fourth example. The cooling circuit of the fourth example is the same as the cooling circuit 10A (illustrated in FIG. 6) of the first example. In the description of the fourth example, the component members identical to those in the first example are designated by identical reference signs to omit the description thereof.

The map illustrated in FIG. 16 has the temperature of a first module $B_1$ as a vertical axis and the temperature of an X-th module $B_X$ as a horizontal axis. The ECU 20 determines a target point A on the map. The target point A is defined from the temperature $T_{in}$ of the cooling medium flowing at the first module $B_1$ side and the temperature $T_{out}$ of the cooling medium flowing at the X-th module $B_X$ side, the temperature $T_{in}$ being assumed to be the temperature of the first module $B_1$, the temperature $T_{out}$ being assumed to be the temperature of the X-th module $B_X$, regardless of the circulation direction of the cooling medium. A point G is a point constituted of a limit temperature $T_{B1\_max}$ of the first module $B_1$ and a limit temperature $T_{BX\_max}$ of the X-th module $B_X$. A reference straight line R is a straight line connecting the point G and a point where the temperature of the first module $B_1$ and the temperature of the X-th module $B_X$ reach "0 °C." A point M is a point constituted of a specified temperature (hereinafter referred to as "first temperature") $T_{B1\_\beta}$ within a temperature range of 70% to 90% of the limit temperature $T_{B1\_max}$ of the first module $B_1$ and the limit temperature $T_{BX\_max}$ of the X-th module $B_X$. A specified value $Z_1$ is the distance from the point M to the reference straight line R. A point N is a point constituted of a specified temperature (hereinafter referred to as "second temperature) $T_{BX\_\beta}$ within a temperature range of 70% to 90% of the limit temperature $T_{BX\_max}$ of the X-th module $B_X$ and the limit temperature $T_{B1\_max}$ of the first module $B_1$. A specified value $Z_2$ is the distance from the point N to the reference straight line R. In the fourth example as in the first example, the limit temperature $T_{B1\_max}$ of the first module $B_1$ and the limit temperature $T_{BX\_max}$ of the X-th module $B_X$ are the same temperature. Accordingly, it is possible to set the specified value $Z_1$ and the specified value $Z_2$ to the same value. In the fourth example, "$Z_1 = Z_2$" is set.

A description is now given of a correspondence relation between a switching control flow in the fourth example and the control flow illustrated in FIG. 14. In step S11 of FIG. 14, the ECU 20 determines the target point A constituted of the temperature $T_{in}$ of the cooling medium flowing at the first module $B_1$ side and the temperature $T_{out}$ of the cooling medium flowing at the X-th module $B_X$ side. In step S13 of FIG. 14, the ECU 20 determines whether or not the distance L between the target point A and the reference straight line R on the temperature map is larger than the specified value $Z_1$. The specified value $Z_1$ used in step S13 is a value set based on the limit temperature $T_{BX\_max}$ of the X-th module $B_X$ and the first temperature $T_{B1\_\beta}$ of the first module $B_1$. When positive determination is made in step S13, the temperature of the X-th module $B_X$ is considerably higher than the temperature of the first module $B_1$. Therefore, it can be determined that the X-th module $B_X$ is in the state (specified high temperature state) where the necessity of cooling is higher than the necessity of cooling the first module $B_1$. In step S15 of FIG. 14, the ECU 20 determines whether or not the distance L between the target point A and the reference straight line R on the temperature map is larger than the specified value $Z_2$ in the state where the cooling medium is flowing in the negative direction. The specified value $Z_2$ used in step S15 is a value set based on the limit temperature $T_{B1\_max}$ of the first module $B_1$ and the second temperature $T_{BX\_\beta}$ of the X-th module $B_X$. When positive determination is made in step S15, the temperature of the first module $B_1$ is considerably higher than the temperature of the X-th module $B_X$. Therefore, it can be determined that the first module $B_1$ is in the state (specified high temperature state) where the necessity of cooling is higher than the necessity of cooling the X-th module $B_X$.

According to the fourth example, the same effect as in the first example can be demonstrated.

Fifth Example of Second Embodiment

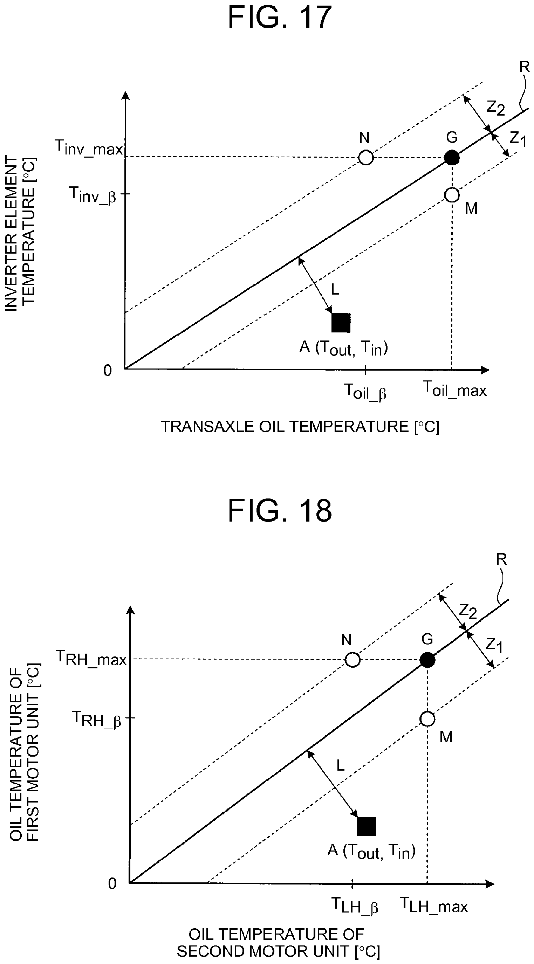

A description is given of a fifth example with reference to FIG. 17. In the fifth example, the cooling device 1 of the second embodiment is applied to a hybrid vehicle.

FIG. 17 is a map schematically illustrating one example of a temperature map used in the fifth example. The cooling circuit of the fifth example is the same as the cooling circuit 10B (illustrated in FIG. 8) of the second example. In the description of the fifth example, the component members identical to those in the second example are designated by identical reference signs to omit the description thereof.

The map illustrated in FIG. 17 is a map having the temperature of an inverter element as a vertical axis and the oil temperature of a transaxle as a horizontal axis. The ECU 20 determines a target point A on the map. The target point A is defined from the temperature $T_{in}$ of the cooling medium flowing at the inverter 71 side and the temperature $T_{out}$ of the cooling medium flowing at the heat exchanger 72 side, the temperature $T_{in}$ being assumed to be the temperature of the inverter 71 (temperature of the inverter element), the temperature $T_{out}$ being assumed to be the temperature of the heat exchanger 72 (oil temperature of the transaxle oil) regardless of the circulation direction of the cooling medium. A point G is a point constituted of a limit temperature $T_{inv\_max}$ of the inverter element and a limit oil temperature $T_{oil\_max}$ of the transaxle oil. A reference straight line R is a straight line connecting the point G and a point where the temperatures of the inverter element and the oil temperature of the transaxle oil become "0 °C." A point M is a point constituted of a specified temperature (hereinafter referred to as "first temperature") $T_{inv\_\beta}$ within a temperature range of 70% to 90% of the limit temperature $T_{inv\_max}$ of the inverter element and the limit oil temperature $T_{oil\_max}$ of the transaxle oil. A specified value $Z_1$ is the distance from the point M to the reference straight line R. A point N is a point constituted of a specified temperature (hereinafter referred to as "second temperature) $T_{oil\_\beta}$ within a temperature range of 70% to 90% of the limit oil temperature $T_{oil\_max}$ of the transaxle oil and the limit temperature $T_{inv\_max}$ of the inverter element. A specified value $Z_2$ is the distance from the point N to the reference straight line R. In the fifth example as in the second example, the variation of the amount of heat generation in the transaxle becomes larger than the variation of the amount of heat generation in the inverter 71 depending on the driving status of the vehicle. Accordingly, th limit oil temperature $T_{oil\_max}$ of the transaxle oil is higher than the limit temperature $T_{inv\_max}$ of the inverter element. This makes it possible to set the specified value $Z_1$ and the specified value $Z_2$ to values different from each other. In the fifth example, "$Z_1 < Z_2$" is set.

A description is now given of a correspondence relation between a switching control flow in the fifth example and the control flow illustrated in FIG. 14. In step S11 of FIG. 14, the ECU 20 determines the target point A constituted of the temperature $T_{in}$ of the cooling medium flowing at the inverter 71 side and the temperature $T_{out}$ of the cooling medium flowing at the heat exchanger 72 side. In step S13 of FIG. 14, the ECU 20 determines whether or not the distance L between the target point A and the reference straight line R on the temperature map is larger than the specified value $Z_1$. The specified value $Z_1$ used in step S13 is a value set based on the limit oil temperature $T_{oil\_max}$ of the transaxle oil, and a first temperature $T_{inv\_\beta}$ of the inverter element. When positive determination is made in step S13, the ECU 20 can determine that the oil temperature of the transaxle oil is considerably higher than the temperature of the inverter element, and therefore the heat exchanger 72 is in the state (specified high temperature state) where the necessity of cooling is higher than the necessity of cooling the inverter 71. In step S15 of FIG. 14, the ECU 20 determines whether or not the distance L between the target point A and the reference straight line R on the map is larger than the specified value $Z_2$ in the state where the cooling medium is flowing in the negative direction. The specified value $Z_2$ used in step S15 is a value set based on the limit temperature $T_{inv\_max}$ of the inverter element and a second temperature $T_{oil\_\beta}$ of the transaxle oil. When positive determination is made in step S15, the ECU 20 can determine that the temperature of the inverter element is considerably higher than the oil temperature of the transaxle oil, and therefore the inverter 71 is in the state (specified high temperature state) where the necessity of cooling is higher than the necessity of cooling the heat exchanger 72.

According to the fifth example, the same effect as in the second example can be demonstrated.

Sixth Example of Second Embodiment

A description will be given of a sixth example with reference to FIG. 18. In the sixth example, the cooling device 1 of the second embodiment is applied to an in-wheel motor vehicle. FIG. 18 is a map schematically illustrating one example of a temperature map used in the sixth example. The cooling circuit of the sixth example is the same as the cooling circuit 10C (illustrated in FIG. 9) of the third example. In the description of the sixth example, the component members identical to those in the third example are designated by identical reference signs to omit the description thereof.

The map illustrated in FIG. 18 is a map having the oil temperature of an oil of the first motor unit $M_{RH}$ as a vertical axis and the oil temperature of an oil of the second motor unit $M_{LH}$ as a horizontal axis. The ECU 20 determines a target point A on the map. The target point A is defined from the temperature $T_{in}$ of the cooling medium flowing at the first heat exchanger 81 side and the temperature $T_{out}$ of the cooling medium flowing at the second heat exchanger 82 side, the temperature $T_{in}$ being assumed to be the temperature of the first heat exchanger 81(oil temperature of the oil of the first motor unit $M_{RH}$), the temperature $T_{out}$ being assumed to be the temperature of the second heat exchanger 82 (oil temperature of the oil of the second motor unit $M_{LH}$) regardless of the circulation direction of the cooling medium. A point G is a point constituted of a limit oil temperature $T_{RH\_max}$ of the oil of the first motor unit $M_{RH}$ and a limit oil temperature $T_{LH\_max}$ of the oil of the second motor unit $M_{LH}$. A reference straight line R is a straight line extending through the point G and a point where the oil temperatures of the oils of the motor units $M_{RH}$, $M_{LH}$ become "0 °C." A point M is a point constituted of a specified temperature (hereinafter referred to as "first temperature") $T_{RH\_\beta}$ within a temperature range of 70% to 90% of the limit oil temperature $T_{RH\_max}$ of the oil of the first motor unit $M_{RH}$ and the oil temperature $T_{LH\_max}$ of the oil of the second motor unit $M_{LH}$. A specified value $Z_1$ is the distance from the point M to the reference straight line R. A point N is a point constituted of a specified temperature (hereinafter referred to as "second temperature") $T_{LH\_\beta}$ within a temperature range of 70% to 90% of the limit oil temperature $T_{LH\_max}$ of the oil of the second motor unit $M_{LH}$ and the limit oil temperature $T_{RH\_max}$ of the oil of the first motor unit $M_{RH}$. A specified value $Z_2$ is the distance from the point N to the reference straight line R. In a pair of in-wheel motors provided on the right and left wheels, the motor units $M_{RH}$, $M_{LH}$ have the same configuration. Accordingly, the limit oil temperature $T_{RH\_max}$ of the oil of the first motor unit $M_{RH}$ and the limit oil temperature $T_{LH\_max}$ of the oil of the second motor unit $M_{LH}$ have the same temperature. Hence, it is possible to set the specified value $Z_1$ and the specified value $Z_2$ to the same value. In the sixth example, "$Z_1 = Z_2$" is set.

A description is now given of a correspondence relation between a switching control flow in the sixth example and the control flow illustrated in FIG. 14. In step S11 of FIG. 14, the ECU 20 estimates the temperature $T_{in}$ of the cooling medium flowing at the first heat exchanger 81 side and the temperature $T_{out}$ of the cooling medium flowing at the second heat exchanger 82 side. The ECU 20 also determines a target point A constituted of the temperature $T_{in}$ and the temperature $T_{out}$. In step S13 of FIG. 14, the ECU 20 determines whether or not the distance L between the target point A and the reference straight line R on the temperature map is larger than a specified value $Z_1$. The specified value $Z_1$ used in step S13 is a value set based on the limit oil temperature $T_{LH\_max}$ of the oil of the second motor unit $M_{LH}$, and the first temperature $T_{RH\_\beta}$ of the oil of the first motor unit $M_{RH}$. When positive determination is made in step S13, the ECU 20 can determine that the oil temperature of the oil of the second motor unit $M_{LH}$ is considerably higher than the oil temperature of the oil of the first motor unit $M_{RH}$, and therefore the second heat exchanger 82 is in the state (specified high temperature state) where the necessity of cooling is higher than the necessity of cooling the first heat exchanger $B_1$. In step S15 of FIG. 14, the ECU 20 determines whether or not the distance L between the target point A and the reference straight line R on the map is larger than a specified value $Z_2$ in the state where the cooling medium is flowing in the negative direction. The specified value $Z_2$ used in step S15 is a value set based on the limit oil temperature $T_{RH\_max}$ of the oil of the first motor unit $M_{RH}$, and the second temperature $T_{LH\_\beta}$ of the oil of the second motor unit $M_{LH}$. When positive determination is made in step S15, the ECU 20 can determine that the oil temperature of the oil of the first motor unit $M_{RH}$ is considerably higher than the oil temperature of the oil of the second motor unit $M_{LH}$, and therefore the first heat exchanger 81 is in the state (specified high temperature state) where the necessity of cooling is higher than the necessity of cooling the second heat exchanger 82.

According to the sixth example, the same effect as in the third example can be demonstrated.

A description is now given of modifications applicable to the embodiments disclosed. In the description of the modifications, the component members identical to those in each of the embodiments are designated by identical reference signs to omit the description thereof.

First Modification

For example, the position of the temperature sensor 51 placed in the cooling circuit 10 is not limited to the position illustrated in FIG. 1. In the first modification, the temperature sensor 51 may measure the temperature $T_{in}$ of the cooling medium at the side of the first heat generation source 31, and the ECU 20 may estimate the temperature $T_{out}$ of the cooling medium at the side of the second heat generation source 32. The temperature sensor 51 of the first modification is placed between the first heat generation source 31 and the radiator 12 in the cooling circuit 10. In this case, the temperature sensor 51 measures the temperature $T_{in}$ of the cooling medium flowing out through the outlet of the radiator 12 and flowing into the inlet of the first heat generation source 31 in the state where the cooling medium flows in the positive direction. The ECU 20 estimates the temperature $T_{out}$ of the cooling medium flowing between the second heat generation source 32 and the radiator 12 with use of the temperature $T_{in}$ of the cooling medium measured with the temperature sensor 51. An estimation method of the temperature $T_{out}$ will be described.

When the cooling medium is flowing in the positive direction, the temperature $T_{in}$ is a known value, and the temperature $T_{out}$ is an unknown value in Expression (5). Hence, Expression (5) can be deformed into Expression (6) that represents the unknown temperature $T_{out}$.

$$T_{out} = \frac{\rho \cdot c \cdot V \cdot T_{in} - q \cdot T_{air}}{\rho \cdot c \cdot V - q} \qquad \cdots (6)$$

Thus, the temperature estimation means 21 can calculate, by Expression (6), the temperature $T_{out}$ when the cooling medium is flowing through the cooling circuit 10 in the positive direction.

When the cooling medium flows in the negative direction, the temperature $T_{in}$ is a known value. As a consequence, the ECU 20 can calculate the temperature $T_{out}$ by Expression (2).

Furthermore, the first modification is applicable to, among the first to sixth examples, the first example, the third example, the fourth example, and the sixth example, in which the heat generation sources can be assumed to be identical in variation of the amount of heat generation.

Second Modification

In another modification, the ECU 20 may calculate both the temperature $T_{in}$ of the cooling medium at the side of the first heat generation source 31 and the temperature $T_{out}$ at the side of the second heat generation source 32 as estimated values without the temperature sensor 51 provided in the cooling circuit 10. In the second modification, the amount of heat generation in each of the heat generation source 31, 32 is mapped in accordance with the traveling status of the vehicle. The mapped information is prestored in a storage unit (not illustrated) included in the ECU 20. With reference to the map stored in the storage unit, the ECU 20 estimates the amount of heat generation in each of the heat generation sources 31, 32, and also estimates the temperature $T_{in}$ of the cooling medium at the side of the first heat generation source 31 and the temperature $T_{out}$ of the cooling medium at the side of the second heat generation source 32, based on the vehicle operation information based on the signals input into the ECU 20 from various sensors mounted on the vehicle, the sensors including the temperature sensor 51, the vehicle speed sensor 52, and the ambient temperature sensor 53.

In the second modification, when at least one of the heat generation sources 31, 32 is a heat exchanger as in the second example, the third example, the fifth example, and the sixth example, the amount of heat generation in the heat generation source that is connected to the pertinent heat exchanger may be mapped. With use of the map, the ECU 20 may estimate the temperature $T_{in}$ of the cooling medium at the side of the first heat generation source 31 and the temperature $T_{out}$ of the cooling medium at the side of the second heat generation source 32 in the cooling circuit 10.

When the second modification is applied to a hybrid vehicle as in the case of the second example and the fourth example, the motor-generator as a power source and the transaxle are cooled with the transaxle oil (both component members not illustrated). Accordingly, the amount of heat generation relating to each of the motor-generator and the transaxle, which are connected to the heat exchanger 72, may be mapped. In the case of applying the second modification to the in-wheel motor vehicle as in the third example and the sixth example, the amount of heat generation in the motor units $M_{RH}$, $M_{LH}$, which are connected to the heat exchangers 81, 82, may be mapped. The amount of heat generation in the motor-generator (the second example, the fourth example) and the amount of heat generation in each of the motor units $M_{RH}$, $M_{LH}$ (the third example, the sixth example) may be calculated with use of a vehicle speed S, a torque, and a state of charge (SOC) of the battery. In the case of the second example and the fourth example, the amount of heat generation in the transaxle may also be calculated with use of the speed and the torque.

Third Modification

When the amount of heat generation in each of the heat generation sources 31, 32 can be estimated with use of a map as in the second modification, the temperature of each of the heat generation sources 31, 32 can be estimated based on the estimated values of the amounts of heat generation without estimation of the temperature of the cooling medium. Accordingly, in a third modification, when the temperature of a target heat generation source can be estimated by estimating the amount of heat generation in each of the heat generation sources 31, 32, the rotation direction of the motor pump 11 may be switched with use of the estimated value (estimated temperature) of the temperature of the target heat generation source without use of the temperature of the cooling medium. The ECU 20 determines whether or not the temperature of the estimated target heat generation source is higher than a reference temperature determined in accordance with the target heat generation source. When the estimated temperature is higher than the reference temperature, the ECU 20 determines that the target heat generation source is in a specified high temperature state. Furthermore, the ECU 20 may also switch the rotation direction of the motor pump 11 with use of a difference (temperature difference) between an estimated value of the temperature of the first heat generation source 31 (first estimated temperature) and an estimated value of the temperature of the second heat generation source 32 (second estimated temperature). According to the third modification, the temperature of the target heat generation source can be estimated based on the estimated value of the amount of heat generation without the temperature of the cooling medium. Therefore, it is possible to determine whether or not the target heat generation source is in the specified high temperature state with the estimated temperature.

Fourth Modification

In a modification of the second embodiment, when the cooling circuit includes a heat exchanger, the oil temperature of an oil (temperature of a second cooling medium) flowing into the heat exchanger may be measured with an oil temperature sensor. With use of the oil temperature, a target point A may be determined. In a fourth modification, the rotation direction of the motor pump 11 can be switched without use of the temperature of the cooling medium flowing at the heat exchanger side in the cooling circuit 10. The fourth modification is applicable to the fifth example and the sixth example.

When the fourth modification is applied to the fifth example, an oil temperature $T_{oil}$ of the transaxle oil flowing into the heat exchanger 72 in the cooling circuit 10B is measured with an oil temperature sensor (not illustrated). Accordingly, the ECU 20 can determine a target point A constituted of the oil temperature $T_{oil}$ of the transaxle oil (temperature of the second cooling medium) instead of the temperature $T_{out}$ of the cooling medium at the side of the heat exchanger 72.

When the fourth modification is applied to the sixth example, an oil temperature $T_{oil\_1}$ of the oil of the first motor unit $M_{RH}$ flowing into the first heat exchanger 81 is measured with a first oil temperature sensor (not illustrated), and an oil temperature $T_{oil\_2}$ of the oil of the second motor unit $M_{LH}$ flowing into the second heat exchanger 82 is measured with a second oil temperature sensor (not illustrated). Accordingly, the ECU 20 can determine a target point A constituted of the oil temperature $T_{oil\_1}$ of the oil instead of the temperature $T_{in}$ of the cooling medium at the side of the first heat exchanger 81 and the oil temperature $T_{oil\_2}$ of the oil instead of the temperature $T_{out}$ of the cooling medium at the side of the second heat exchanger 82.

The present invention is not limited to the embodiments disclosed. The present invention can properly be changed without departing from the object of the present invention.

## Claims

1. A cooling device for a vehicle, the cooling device comprising:

   a cooling circuit (10; 10A; 10B; 10C) that allows circulation of a cooling medium that flows through and cools a plurality of heat generation sources (31, 32; $B_1$, $B_x$; 71, 72; 81, 82), the heat generation sources (31, 32; $B_1$, $B_x$; 71, 72; 81, 82) being placed in series in the cooling circuit (10; 10A; 10B; 10C);
   a motor pump (11) placed in the cooling circuit (10; 10A; 10B; 10C), the motor pump (11) being configured to circulate the cooling medium in the cooling circuit (10; 10A; 10B; 10C), the motor pump (11) having a rotation direction switched between a positive rotation direction and a negative rotation direction that is opposite to the positive rotation direction;
   a radiator (12) placed in the cooling circuit (10; 10A; 10B; 10C), the radiator (12) being configured to radiate heat from the cooling medium flowing through the cooling circuit (10; 10A; 10B; 10C); and
   an electronic control unit (20) configured to control an operation of the motor pump (11),
   the electronic control unit (20) being configured to execute control for switching the rotation direction of the motor pump (11) so as to switch a circulation direction of the cooling medium, and
   the electronic control unit (20) being configured to execute the control for switching the rotation direction of the motor pump (11) when the electronic control unit (20) determines that a target heat generation source, out of the heat generation sources (31, 32; $B_1$, $B_x$; 71, 72; 81, 82), is in a specified high temperature state, the target heat generation source being positioned at a most downstream side with respect to an outlet of the radiator (12) in the circulation direction of the cooling medium when the motor pump (11) is rotating.

2. The cooling device according to claim 1, wherein
   the electronic control unit (20) is configured to determine that the target heat generation source is in the specified high temperature state when a temperature of the cooling medium at an outlet side of the target heat generation source is higher than a reference temperature, and
   the reference temperature is a temperature determined for each of the target heat generation sources (31, 32; $B_1$, $B_x$; 71, 72; 81, 82).

3. The cooling device according to claim 2, wherein
   the cooling circuit (10; 10A; 10B; 10C) is placed between the target heat generation source and the radiator (12),
   the cooling circuit (10; 10A; 10B; 10C) includes a temperature sensor (51) that measures the temperature of the cooling medium at the outlet side of the target heat generation source, and
   the electronic control unit (20) is configured to execute the control for switching the rotation direction of the motor pump (11) when the temperature of the cooling medium measured with the temperature sensor (51) is higher than the reference temperature.

4. The cooling device according to claim 3, wherein
   the heat generation sources (31, 32; $B_1$, $B_x$; 71, 72; 81, 82) include a first heat generation source (31; $B_1$; 71; 81) and a second heat generation source (32; $B_x$; 72; 82),
   the first heat generation source (31; $B_1$; 71; 81) is positioned at a most upstream side with respect to the outlet of the radiator (12) in the circulation direction of the cooling medium when the motor pump (11) is rotating in the positive rotation direction,

the second heat generation source (32; $B_x$; 72; 82) is positioned at the most downstream side with respect to the outlet of the radiator (12) in the circulation direction of the cooling medium when the motor pump (11) is rotating in the positive rotation direction,

the temperature sensor (51) is placed between an outlet of the second heat generation source (32; $B_x$; 72; 82) and an inlet of the radiator (12) in the circulation direction of the cooling medium in the state where the motor pump (11) is rotating in the positive rotation direction,

the electronic control unit (20) is configured to estimate, when the rotation direction of the motor pump (11) is the negative rotation direction, the temperature of the cooling medium at an outlet side of the first heat generation source (31; $B_1$; 71; 81) with use of the temperature of the cooling medium measured with the temperature sensor (51),

the electronic control unit (20) is configured to execute control for switching the rotation direction of the motor pump (11) from the positive rotation direction to the negative rotation direction, when the rotation direction of the motor pump (11) is the positive rotation direction, the second heat generation source (32; $B_x$; 72; 82) is the target heat generation source, and the measured temperature of the cooling medium is higher than the reference temperature, and

the electronic control unit (20) is configured to execute control for switching the rotation direction of the motor pump (11) from the negative rotation direction to the positive rotation direction, when the rotation direction of the motor pump (11) is the negative rotation direction, the first heat generation source (31; $B_1$; 71; 81) is the target heat generation source, and the estimated temperature of the cooling medium is higher than the reference temperature.

5. The cooling device according to claim 4, wherein a variation of an amount of heat generation in the second heat generation source (72) corresponding to a traveling state of the vehicle is larger than a variation of an amount of heat generation in the first heat generation source (71).

6. The cooling device according to claim 3, wherein
the heat generation sources include a first heat generation source (31; $B_1$; 71; 81) and a second heat generation source (32; $B_x$; 72; 82),

the first heat generation source (31; $B_1$; 71; 81) is positioned at a most upstream side with respect to the outlet of the radiator (12) in the circulation direction of the cooling medium when the motor pump (11) is rotating in the positive rotation direction,

the second heat generation source (32; $B_x$; 72; 82) is positioned at a most downstream side with respect to the outlet of the radiator (12) in the circulation direction of the cooling medium when the motor pump (11) is rotating in the positive rotation direction,

the temperature sensor (51) is placed between an outlet of the radiator (12) and an inlet of the first heat generation source (31; $B_1$; 71; 81) in the circulation direction of the cooling medium in the state where the motor pump (11) is rotating in the positive rotation direction,

the electronic control unit (20) is configured to estimate, when the rotation direction of the motor pump (11) is the positive rotation direction, the temperature of the cooling medium at an outlet side of the second heat generation source (32; $B_x$; 72; 82) with use of the temperature of the cooling medium measured with the temperature sensor (51),

the electronic control unit (20) is configured to execute control for switching the rotation direction of the motor pump (11) from the positive rotation direction to the negative rotation direction, when the rotation direction of the motor pump (11) is the positive rotation direction, the second heat generation source (32; $B_x$; 72; 82) is the target heat generation source, and the estimated temperature of the cooling medium is higher than the reference temperature, and

the electronic control unit (20) is configured to execute control for switching the rotation direction of the motor pump (11) from the negative rotation direction to the positive rotation direction, when the rotation direction of the motor pump (11) is the negative rotation direction, the first heat generation source (31; $B_1$; 71; 81) is the target heat generation source, and the measured temperature of the cooling medium is higher than the reference temperature.

7. The cooling device according to claim 2, wherein
the electronic control unit (20) is configured to estimate the temperature of the cooling medium at the outlet side of the target heat generation source based on a traveling state of the vehicle, and

the electronic control unit (20) is configured to execute the control for switching the rotation direction of the motor pump (11), when the estimated temperature of the cooling medium is higher than the reference temperature.

8. The cooling device according to claim 7, wherein
the heat generation sources include a first heat generation source (31; $B_1$; 71; 81) and a second heat generation

source (32; $B_x$; 72; 82),

the first heat generation source (31; $B_1$; 71; 81) is positioned at a most upstream side with respect to the outlet of the radiator (12) in the circulation direction of the cooling medium when the motor pump (11) is rotating in the positive rotation direction,

the second heat generation source (32; $B_x$; 72; 82) is positioned at a most downstream side with respect to the outlet of the radiator (12) in the circulation direction of the cooling medium when the motor pump (11) is rotating in the positive rotation direction,

the electronic control unit (20) is configured to estimate, when the rotation direction of the motor pump (11) is the positive rotation direction, the temperature of the cooling medium at an outlet side of the second heat generation source (32; $B_x$; 72; 82) based on the traveling state of the vehicle with the second heat generation source (32; $B_x$; 72; 82) as the target heat generation source,

the electronic control unit (20) is configured to estimate, when the rotation direction of the motor pump (11) is the negative rotation direction, the temperature of the cooling medium at an outlet side of the first heat generation source (31; $B_1$; 71; 81) based on the traveling state of the vehicle with the first heat generation source (31; $B_1$; 71; 81) as the target heat generation source,

the electronic control unit (20) is configured to execute control for switching the rotation direction of the motor pump (11) from the positive rotation direction to the negative rotation direction, when the rotation direction of the motor pump (11) is the positive rotation direction, and the estimated temperature of the cooling medium at the outlet side of the second heat generation source (32; $B_x$; 72; 82) is higher than the reference temperature, and

the electronic control unit (20) is configured to execute control for switching the rotation direction of the motor pump (11) from the negative rotation direction to the positive rotation direction, when the rotation direction of the motor pump (11) is the negative rotation direction, and the estimated temperature of the cooling medium at the outlet side of the first heat generation source (31; $B_1$; 71; 81) is higher than the reference temperature.

9. The cooling device according to any one of claims 2 to 8, wherein the reference temperature is a specified temperature within a temperature range that enables the target heat generation source to operate normally.

10. A cooling device for a vehicle, comprising:

a cooling circuit that allows circulation of a cooling medium that cools a plurality of heat generation sources, the heat generation sources being placed in series to cause the cooling medium to flow through the cooling circuit, the heat generation sources including a first heat generation source (31; $B_1$; 71; 81) and a second heat generation source (32; $B_x$; 72; 82);

a radiator (12) placed in the cooling circuit, the radiator (12) being configured to radiate heat from the cooling medium flowing through the cooling circuit;

a motor pump (11) placed in the cooling circuit, the motor pump (11) being configured to circulate the cooling medium in the cooling circuit, the motor pump (11) having a rotation direction switched between a positive rotation direction and a negative rotation direction that is opposite to the positive rotation direction, the first heat generation source (31; $B_1$; 71; 81) being a heat generation source positioned at a most upstream side, and the second heat generation source (32; $B_x$; 72; 82) being a heat generation source positioned at a most downstream side with respect to an outlet of the radiator (12) in a circulation direction of the cooling medium in a state where the motor pump (11) is rotating in the positive rotation direction; and

an electronic control unit (20) configured to control an operation of the motor pump (11),

the electronic control unit (20) being configured to execute control for switching the rotation direction of the motor pump (11) to switch the circulation direction of the cooling medium;

the electronic control unit (20) being configured to execute the control for switching the rotation direction of the motor pump (11), when the motor pump (11) is rotating in the positive rotation direction, and the electronic control unit (20) determines that the second heat generation source (32; $B_x$; 72; 82) is in a high temperature state where a first temperature difference exceeds a specified reference, the first temperature difference being a value obtained by subtracting a temperature of the first heat generation source (31; $B_1$; 71; 81) from a temperature of the second heat generation source (32; $B_x$; 72; 82); and

the electronic control unit (20) being configured to execute the control for switching the rotation direction of the motor pump (11), when the motor pump (11) is rotating in the negative rotation direction, and the electronic control unit (20) determines that the first heat generation source (31; $B_1$; 71; 81) is in a high temperature state where a second temperature difference exceeds a specified reference, the second temperature difference being a value obtained by subtracting the temperature of the second heat generation source (32; $B_x$; 72; 82) from the temperature of the first heat generation source (31; $B_1$; 71; 81).

**11.** The cooling device according to claim 10, wherein
the electronic control unit (20) is configured to determine whether or not the first heat generation source (31; $B_1$; 71; 81) or the second heat generation source (32; $B_x$; 72; 82) is in the high temperature state with use of a temperature map indicating a relation between a temperature of the cooling medium flowing between the first heat generation source (31; $B_1$; 71; 81) and the radiator (12) and a temperature of the cooling medium flowing between the second heat generation source (32; $B_x$; 72; 82) and the radiator (12).

**12.** The cooling device according to claim 11, wherein
the temperature map is a map where the temperature of the cooling medium flowing between the first heat generation source (31; $B_1$; 71; 81) and the radiator (12) corresponds to the temperature of the first heat generation source (31; $B_1$; 71; 81), and the temperature of the cooling medium flowing between the second heat generation source (32; $B_x$; 72; 82) and the radiator (12) corresponds to the temperature of the second heat generation source (32; $B_x$; 72; 82), the temperature map includes a reference straight line predetermined based on a first limit temperature and a second limit temperature, the first limit temperature being an upper limit of a temperature range that enables the first heat generation source (31; $B_1$; 71; 81) to operate normally, the second limit temperature being an upper limit of a temperature range that enables the second heat generation source (32; $B_x$; 72; 82) to operate normally, and
the electronic control unit (20) is configured to determine that the first heat generation source (31; $B_1$; 71; 81) or the second heat generation source (32; Bx; 72; 82) is in the high temperature state, when a distance between a target point and the reference straight line is larger than a specified value, the target point being determined on the temperature map in accordance with the temperature of the cooling medium flowing between the first heat generation source (31; $B_1$; 71; 81) and the radiator (12) and the temperature of the cooling medium flowing between the second heat generation source (32; $B_x$; 72; 82) and the radiator (12).

**13.** The cooling device according to claim 12, wherein
the cooling circuit includes a temperature sensor (51) that measures the temperature of the cooling medium, the temperature sensor (51) being placed between the second heat generation source (32; $B_x$; 72; 82) and the radiator (12),
the electronic control unit (20) is configured to estimate the temperature of the cooling medium flowing between the first heat generation source (31; $B_1$; 71; 81) and the radiator (12) with use of the temperature of the cooling medium measured with the temperature sensor (51),
the reference straight line is a straight line connecting, on the temperature map, a point constituted of the first limit temperature and the second limit temperature and a point where the temperature of the first heat generation source (31; $B_1$; 71; 81) and the temperature of the second heat generation source (32; $B_x$; 72; 82) are zero °C, and
the electronic control unit (20) is configured to determine the target point where the estimated temperature of the cooling medium is assumed to be the temperature of the first heat generation source (31; $B_1$; 71; 81) on the temperature map, and the temperature of the cooling medium measured with the temperature sensor (51) is assumed to be the temperature of the second heat generation source (32; $B_x$; 72; 82) on the temperature map.

**14.** The cooling device according to claim 13, wherein a variation of an amount of heat generation in the second heat generation source (72) corresponding to a traveling state of the vehicle is larger than a variation of an amount of heat generation in the first heat generation source (71).

**15.** The cooling device according to claim 12, wherein
the cooling circuit includes a temperature sensor (51) that measures the temperature of the cooling medium, the temperature sensor (51) being placed between the first heat generation source (31; $B_1$; 71; 81) and the radiator (12),
the electronic control unit (20) is configured to estimate the temperature of the cooling medium flowing between the second heat generation source (32; $B_x$; 72; 82) and the radiator (12) with use of the temperature of the cooling medium measured with the temperature sensor (51),
the reference straight line is a straight line connecting, on the temperature map, a point constituted of the first limit temperature and the second limit temperature and a point where the temperature of the first heat generation source (31; $B_1$; 71; 81) and the temperature of the second heat generation source (32; $B_x$; 72; 82) are zero °C,
the electronic control unit (20) is configured to determine the target point where the temperature of the cooling medium measured with the temperature sensor (51) is assumed to be the temperature of the first heat generation source (31; $B_1$; 71; 81), and the estimated temperature of the cooling medium is assumed to be the temperature of the second heat generation source (32; $B_x$; 72; 82).

**16.** The cooling device according to claim 12, wherein
the electronic control unit (20) is configured to estimate the temperature of the cooling medium flowing between the first heat generation source (31; $B_1$; 71; 81) and the radiator (12), and estimate the temperature of the cooling medium between the second heat generation source (32; $B_x$; 72; 82) and the radiator (12) based on a traveling state of the vehicle,

the reference straight line is a straight line connecting, on the temperature map, a point constituted of the first limit temperature and the second limit temperature and a point where the temperature of the first heat generation source (31; $B_1$; 71; 81) and the temperature of the second heat generation source (32; $B_x$; 72; 82) are zero °C,

the electronic control unit (20) is configured to determine the target point where the measured temperature of the cooling medium at a side of the first heat generation source (31; $B_1$; 71; 81) is assumed to be the temperature of the first heat generation source (31; $B_1$; 71; 81), and the estimated temperature of the cooling medium at a side of the second heat generation source (32; $B_x$; 72; 82) is assumed to be the temperature of the second heat generation source (32; $B_x$; 72; 82).

17. The cooling device according to any one of claims 12 to 16, wherein
the specified value includes a first specified value and a second specified value,
the first specified value is a distance from a point to the reference straight line on the temperature map, the point being constituted of a first temperature and the second limit temperature, the first temperature being within a temperature range of 70% to 90% of the first limit temperature,
the second specified value is a distance from another point to the reference straight line on the temperature map, the another point being constituted of a second temperature and the first limit temperature, the second temperature being within a temperature range of 70% to 90% of the second limit temperature,
the electronic control unit (20) is configured to execute control for switching the rotation direction of the motor pump (11) from the positive rotation direction to the negative rotation direction, when the rotation direction of the motor pump (11) is the positive rotation direction, the temperature of the cooling medium at the side of the second heat generation source (32; $B_x$; 72; 82) is higher than the temperature of the cooling medium at the side of the first heat generation source (31; $B_1$; 71; 81), and the distance from the target point to the reference straight line is larger than the first specified value, and
the electronic control unit (20) is configured to execute control for switching the rotation direction of the motor pump (11) from the negative rotation direction to the positive rotation direction, when the rotation direction of the motor pump (11) is the negative rotation direction, the temperature of the cooling medium at the side of the first heat generation source (31; $B_1$; 71; 81) is higher than the temperature of the cooling medium at the side of the second heat generation source (32; $B_x$; 72; 82), and the distance from the target point to the reference straight line is larger than the second specified value.

18. The cooling device according to any one of claims 4, 6, 8, 10 to 13, 15, and 16, wherein the first heat generation source ($B_1$) and the second heat generation source ($B_x$) are battery modules included in a battery unit.

19. The cooling device according to any one of claims 4 to 6, 8, and 10 to 17, wherein the first heat generation source (71) is an inverter, and
the second heat generation source (72) is a heat exchanger that performs heat exchange between an oil supplied to a power transmission device of the vehicle and the cooling medium.

20. The cooling device according to any one of claims 4, 6, 8, 10 to 13, 15, and 16, wherein the first heat generation source (81) and the second heat generation source (82) are heat exchangers that perform heat exchange between an oil that cools in-wheel motors provided in right and left wheels of the vehicle and the cooling medium.

21. A control method for a vehicle, the vehicle including a plurality of heat generation sources (31, 32; $B_1$, $B_x$; 71, 72; 81, 82), a cooling circuit (10; 10A; 10B; 10C), a motor pump (11), a radiator (12), and an electronic control unit (20), the cooling circuit (10; 10A; 10B; 10C) allowing circulation of a cooling medium that flows through and cools the heat generation sources (31, 32; $B_1$, $B_x$; 71, 72; 81, 82), the heat generation sources (31, 32; $B_1$, $B_x$; 71, 72; 81, 82) being placed in series in the cooling circuit (10; 10A; 10B; 10C),
the motor pump (11) being placed in the cooling circuit, the motor pump (11) being configured to circulate the cooling medium in the cooling circuit, the motor pump (11) having a rotation direction switched between a positive rotation direction and a negative rotation direction that is opposite to the positive rotation direction,
the radiator (12) being placed in the cooling circuit, the radiator (12) being configured to radiate heat from the cooling medium flowing through the cooling circuit, the control method comprising:

controlling, by the electronic control unit (20), operation of the motor pump (11);
executing, by the electronic control unit (20), control for switching the rotation direction of the motor pump (11) to switch a circulation direction of the cooling medium; and

executing, by the electronic control unit (20), the control for switching the rotation direction of the motor pump (11), when the electronic control unit (20) determines that a target heat generation source, out of the heat generation sources (31, 32; $B_1$, $B_x$; 71, 72; 81, 82), is in a specified high temperature state, the target heat generation source being positioned at a most downstream side with respect to an outlet of the radiator (12) in the circulation direction of the cooling medium when the motor pump (11) is rotating.

22. A control method for a vehicle, the vehicle including a plurality of heat generation sources, a cooling circuit (10; 10A; 10B; 10C), a motor pump (11), a radiator (12), and an electronic control unit (20),

the heat generation sources being placed in series to cause a cooling medium to flow, the heat generation sources including a first heat generation source (31; $B_1$; 71; 81) and a second heat generation source (32; $B_x$; 72; 82),

the cooling medium circulating in the cooling circuit that cools the heat generation sources,

the radiator (12) being placed in the cooling circuit, the radiator (12) being configured to radiate heat from the cooling medium flowing through the cooling circuit,

the motor pump (11) being placed in the cooling circuit, the motor pump (11) being configured to circulate the cooling medium in the cooling circuit, the motor pump (11) having a rotation direction switched between a positive rotation direction and a negative rotation direction that is opposite to the positive rotation direction, and

the first heat generation source (31; $B_1$; 71; 81) being a heat generation source positioned at a most upstream side, and the second heat generation source (32; $B_x$; 72; 82) being a heat generation source positioned at a most downstream side with respect to an outlet of the radiator (12) in a circulation direction of the cooling medium in a state where the motor pump (11) is rotating in the positive rotation direction,

the control method comprising:

controlling, by the electronic control unit (20), operation of the motor pump (11); executing, by the electronic control unit (20), control for switching the rotation direction of the motor pump (11) to switch the circulation direction of the cooling medium;

executing, by the electronic control unit (20), the control for switching the rotation direction of the motor pump (11), when the motor pump (11) is rotating in the positive rotation direction, and the electronic control unit (20) determines that the second heat generation source (32; $B_x$; 72; 82) is in a high temperature state where a first temperature difference exceeds a specified reference, the first temperature difference being a value obtained by subtracting a temperature of the first heat generation source (31; $B_1$; 71; 81) from a temperature of the second heat generation source (32; $B_x$; 72; 82); and

executing, by the electronic control unit (20), the control for switching the rotation direction of the motor pump (11), when the motor pump (11) is rotating in the negative rotation direction, and the electronic control unit (20) determines that the first heat generation source (31; $B_1$; 71; 81) is in a high temperature state where a second temperature difference exceeds a specified reference, the second temperature difference being a value obtained by subtracting the temperature of the second heat generation source (32; $B_x$; 72; 82) from the temperature of the first heat generation source (31; $B_1$; 71; 81).

# FIG. 1

POSITIVE DIRECTION (NORMAL STATE)

NEGATIVE DIRECTION

# FIG. 2

# FIG. 3

DISCHARGE AMOUNT V

MOTOR PUMP OUTPUT P

# FIG. 4

FLOW RATE V

RADIATION
PERFORMANCE q

VEHICLE SPEED S

# FIG. 5

START

S1 — POSITIVE ROTATION DIRECTION? — NO

YES

S2 — TEMPERATURE $T_{out}$ > SPECIFIED TEMPERATURE? — NO

YES

S3 — REVERSE ROTATION DIRECTION OF MOTOR PUMP FROM POSITIVE ROTATION DIRECTION TO NEGATIVE ROTATION DIRECTION

S4 — ESTIMATE TEMPERATURE $T_{in}$ OF COOLANT BETWEEN FIRST HEAT GENERATION SOURCE AND RADIATOR

S5 — TEMPERATURE $T_{in}$ > SPECIFIED TEMPERATURE? — NO

YES

S6 — REVERSE ROTATION DIRECTION OF MOTOR PUMP FROM NEGATIVE ROTATION DIRECTION TO POSITIVE ROTATION DIRECTION

RETURN

# FIG. 6

POSITIVE DIRECTION (NORMAL STATE)

NEGATIVE DIRECTION

# FIG. 7

# FIG. 8

10B

13
RESERVOIR
TANK

72
HEAT
EXCHANGER

11

71
INVERTER

51 ◻ $T_{out}$

$T_{in}$

HV RADIATOR

12

◀------- POSITIVE DIRECTION
(NORMAL STATE)
------▶ NEGATIVE DIRECTION

# FIG. 9

10C

13
RESERVOIR
TANK

82
SECOND HEAT
EXCHANGER

11

81
FIRST HEAT
EXCHANGER

51 ◻ $T_{out}$

$T_{in}$

RADIATOR

12

◀------- POSITIVE DIRECTION
(NORMAL STATE)
------▶ NEGATIVE DIRECTION

# FIG. 10

# FIG. 11

# FIG. 12

# FIG. 13

# FIG. 14

START

$S11$

DETERMINE COORDINATES
ON TEMPERATURE MAP

$S12$

POSITIVE ROTATION
DIRECTION?

NO

YES

$S13$

NO

DISTANCE L >
SPECIFIED VALUE $Z_1$?

YES

$S14$

REVERSE ROTATION DIRECTION
OF MOTOR PUMP FROM POSITIVE
ROTATION DIRECTION TO
NEGATIVE ROTATION DIRECTION

$S15$

NO

DISTANCE L >
SPECIFIED VALUE $Z_2$?

YES

$S16$

REVERSE ROTATION DIRECTION
OF MOTOR PUMP FROM NEGATIVE
ROTATION DIRECTION TO
POSITIVE ROTATION DIRECTION

RETURN

# FIG. 15

# FIG. 16

# FIG. 17

Axes: vertical — INVERTER ELEMENT TEMPERATURE [°C]; horizontal — TRANSAXLE OIL TEMPERATURE [°C]. Labels: $T_{inv\_max}$, $T_{inv\_\beta}$, $T_{oil\_\beta}$, $T_{oil\_max}$, N, G, M, L, R, $Z_1$, $Z_2$, A ($T_{out}$, $T_{in}$), 0.

# FIG. 18

Axes: vertical — OIL TEMPERATURE OF FIRST MOTOR UNIT [°C]; horizontal — OIL TEMPERATURE OF SECOND MOTOR UNIT [°C]. Labels: $T_{RH\_max}$, $T_{RH\_\beta}$, $T_{LH\_\beta}$, $T_{LH\_max}$, N, G, M, L, R, $Z_1$, $Z_2$, A ($T_{out}$, $T_{in}$), 0.

**EP 3 442 074 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   JP 2009245802 A